(19) Europäisches Patentamt / European Patent Office / Office européen des brevets

(11) **EP 2 803 174 B1**

# (12) FASCICULE DE BREVET EUROPEEN

(45) Date de publication et mention
de la délivrance du brevet:
**10.08.2016 Bulletin 2016/32**

(21) Numéro de dépôt: **13701848.7**

(22) Date de dépôt: **09.01.2013**

(51) Int Cl.:
***H04L 27/26*** *(2006.01)*

(86) Numéro de dépôt international:
**PCT/FR2013/050042**

(87) Numéro de publication internationale:
**WO 2013/104860 (18.07.2013 Gazette 2013/29)**

---

(54) **PROCÉDÉ, DISPOSITIFS ET PRODUIT DE PROGRAMME D'ORDINATEUR DE MODULATION ET DE DÉMODULATION DELIVRANT DES SYMBOLES OFDM/OQAM**

VERFAHREN, VORRICHTUNG UND COMPUTERPROGRAMMPRODUKT ZUR MODULATION UND DEMODULATION ZUR BEREITSTELLUNG VON OFDM / OQAM SYMBOLEN

METHOD, APPARATUS AND COMPUTER PROGRAM PRODUCT FOR MODULATION AND DEMODULATION DELIVERING OFDM/OQAM SYMBOLS

---

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.01.2012 FR 1250346**

(43) Date de publication de la demande:
**19.11.2014 Bulletin 2014/47**

(73) Titulaire: **Orange**
**75015 Paris (FR)**

(72) Inventeurs:
• **SIOHAN, Pierre**
  **F-35200 Rennes (FR)**
• **DANDACH, Youssef**
  **92320 Chatillon (FR)**

(74) Mandataire: **Vidon Brevets & Stratégie**
**16B, rue de Jouanet**
**B.P. 90333**
**Technopole Atalante**
**35703 Rennes Cedex 7 (FR)**

(56) Documents cités:
**FR-A1- 2 819 956**

• **YOUSSEF DANDACH ET AL: "Packet transmission for overlapped offset QAM", WIRELESS COMMUNICATIONS AND SIGNAL PROCESSING (WCSP), 2010 INTERNATIONAL CONFERENCE ON, IEEE, PISCATAWAY, NJ, USA, 21 octobre 2010 (2010-10-21), pages 1-6, XP031800069, ISBN: 978-1-4244-7556-8**
• **PIERRE SIOHAN ET AL: "Analysis and Design of OFDM/OQAM Systems Based on Filterbank Theory", IEEE TRANSACTIONS ON SIGNAL PROCESSING, IEEE SERVICE CENTER, NEW YORK, NY, US, vol. 50, no. 5, 1 mai 2002 (2002-05-01), XP011080136, ISSN: 1053-587X**

---

**Description**

**1. Domaine de l'invention**

Le domaine de l'invention est celui des communications numériques.

Plus précisément, l'invention concerne la modulation et la démodulation multiporteuse de type OFDM/OQAM (en anglais « Orthogonal Frequency Division Multiplexing / Offset Quadrature Amplitude Modulation »), BFDM/OQAM (en anglais «Biorthogonal Frequency Division Multiplexing/OQAM ») ou encore FBMC/OQAM (en anglais « Filter Bank Multicarrier / OQAM »), pour lesquels les porteuses sont mises en forme par un filtre prototype.

Encore plus précisément, l'invention concerne les signaux multiporteuses transmis sous la forme de paquets de symboles multiporteuses, et notamment les paquets constitués d'un très faible nombre de symboles multiporteuses.

L'invention trouve notamment des applications dans le domaine des communications sans fil telles que, par exemple, celles effectuées selon le standard 3GPP LTE dans lequel les trames sont constituées de quinze symboles OFDM, ou encore la norme DVB-T2 selon laquelle les trames les plus courtes sont constituées de quatre symboles OFDM, ou encore pour le domaine des communications utilisant des systèmes de courant porteur en ligne, de type IEEE P1901 notamment, dont la durée, pour des signaux de signalisation, peut se limiter à un seul symbole OFDM.

**2. Art antérieur**

Les techniques de transmission à porteuses multiples présentent de nombreux avantages, notamment dans le contexte de canaux multi-trajets. Ainsi les modulations de type OFDM sont particulièrement bien adaptées pour contrer les effets des évanouissements dans les canaux sélectifs en fréquence.

Toutefois, ces modulations OFDM présentent l'inconvénient de générer un signal multiporteuse présentant une mauvaise localisation fréquentielle, et nécessitent en conséquence l'introduction d'un intervalle de garde dans le domaine temporel pour limiter les interférences. Or l'insertion d'un tel intervalle de garde engendre une diminution de l'efficacité spectrale du signal multiporteuse.

Des solutions alternatives ont alors été proposées pour limiter les interférences tout en s'affranchissant de l'insertion d'un intervalle de garde. Ces techniques reposent sur la mise en forme du signal par des filtres (pour un signal discrétisé) ou des fonctions (pour un signal continu), dits filtres ou fonctions prototypes, permettant une meilleure localisation fréquentielle grâce à des propriétés d'orthogonalité restreintes au corps des réels. Il s'agit par exemple des modulations de type OFDM/OQAM ou BFDM/OQAM, classiquement utilisées pour les communications radiofréquences, telles que décrites notamment dans les documents "Analysis of OFDM/OQAM systems based on the filterbank theory", P. Siohan et N. Lacaille, Proc. GLOBECOM'99, Rio de Janeiro, Brazil, Dec. 1999, pp. 2279-2284, et "Design of BFDM/OQAM systems based on biorthogonal modulated filter banks", C. Siclet et P. Siohan, Proc. GLOBECOM'00, San Francisco, USA, Nov. 2000, pp. 701-705.

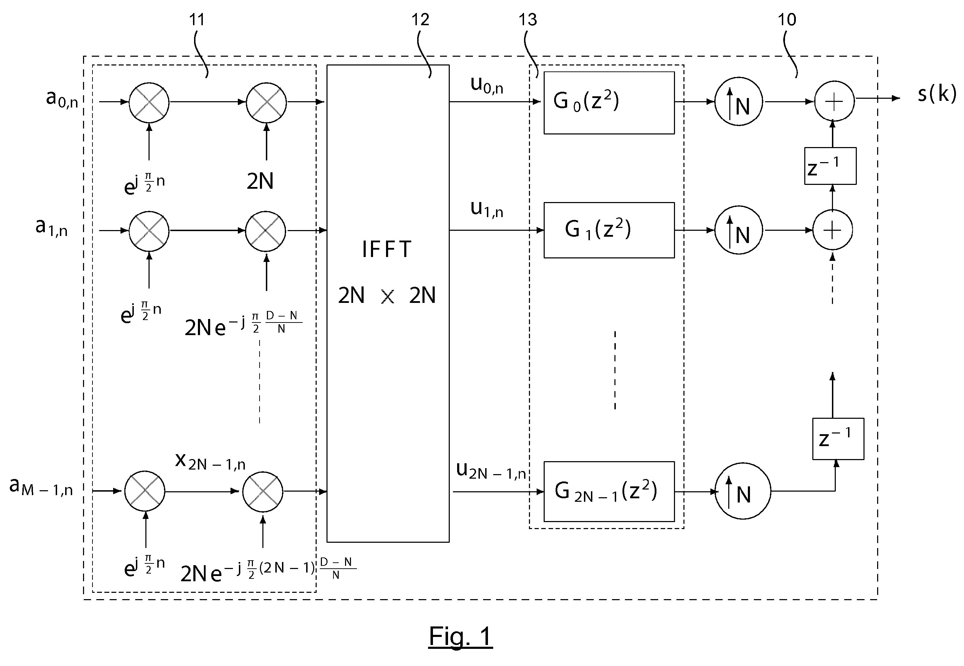

La figure 1 illustre plus précisément le schéma d'un modulateur OFDM/OQAM 10 délivrant un signal multiporteuse de type OFDM/OQAM. Un tel signal peut être représenté, en bande de base et en temps discret, sous la forme suivante :

$$s[t] = \sum_{m=0}^{M-1} \sum_{n=-\infty}^{n=+\infty} a_{m,n} h[t - n\tau] e^{j2\pi mFT} e^{j\phi_{m,n}}$$

avec :

- $a_{m,n}$ une donnée à valeur réelle à transmettre sur une sous-porteuse $m$ à l'instant $n$;
- $M$ le nombre de fréquences porteuses ;
- $\tau = T/2$ un décalage temporel discret, $\tau$ étant la durée d'une donnée réelle ;
- $F = 1 / T$ l'espacement entre les porteuses ;
- $h[n]$ le filtre prototype utilisé par le modulateur, de longueur $L$, à coefficients réels et à phase linéaire ;
- $\phi_{m,n}$ un terme de phase choisi de manière à réaliser une alternance partie réelle-partie imaginaire permettant l'orthogonalité, par exemple égal à

$$\frac{\pi}{2}(n + m) + \varepsilon\pi mn, \text{ avec } \varepsilon = \{0, \pm 1\}.$$

Dans le cas d'une modulation OFDM/OQAM orthogonale, un délai D est appliqué tel que $D = L - 1$, avec $L$ la longueur du filtre prototype. Dans le cas d'une modulation BFDM/OQAM biorthogonale, le délai D peut être choisi d'une manière plus flexible, et peut être tel que $D \leq L-1$.

Comme illustré en figure 1, les données réelles $a_{m,n}$ subissent un pré-traitement ou une pré-modulation 11, permettant notamment d'assurer une quadrature en temps et en fréquence des porteuses du signal multiporteuse.

Plus précisément, au cours de ce pré-traitement, les données réelles $a_{m,n}$ sont multipliées par un premier terme de phase en $\pi/2$, permettant d'assurer un déphasage en temps et en fréquence des porteuses du signal multiporteuse, et par un deuxième terme permettant de tenir compte de la longueur du filtre prototype. Les données obtenues en sortie de ce module de pré-traitement, notés $a_{m,n}^p$, peuvent s'exprimer sous la forme suivante :

$$a_{m,n}^p = a_{m,n} e^{j\frac{\pi}{2}n} 2N e^{-j\frac{\pi}{2}m\frac{D-N}{N}}$$

Ces données sont ensuite converties du domaine fréquentiel vers le domaine temporel, en utilisant classiquement une transformée de Fourier inverse discrète (en anglais IDFT pour « Inverse Discrete Fourier Transform ») de taille M, dans un module IDFT 12. Les porteuses modulées obtenues en sortie du module IDFT 12, notés $u_{0,n}$ à $u_{2N-1,n}$ sont alors filtrés par le filtre prototype $h[n]$ 13, puis sur-échantillonnées et décalées pour obtenir le signal multiporteuse comprenant des symboles OFDM/OQAM $s[k]$ composés de M échantillons complexes avec k tel que $nM \leq k < (n + 1)M.$ Plus précisément, le filtre prototype $h[n]$ peut s'exprimer sous sa forme polyphase, comprenant $M$ composantes polyphases $G_l(z)$, définies par :

$$G_l(z) = \sum_n h\left[l + nM\right] z^{-n}$$

A la réception, la démodulation des symboles se fait en utilisant la partie réelle du produit scalaire suivant pour un signal OFDM/OQAM à support non borné, en temps continu :

$$\hat{a}_{m,n} = \Re\left\{\langle h_{m,n}, s\rangle\right\} = \Re\left\{\int_{-\infty}^{+\infty} h_{m,n}^*(t)s(t)\,dt\right\}$$

La démodulation pour un signal OFDM/OQAM à support borné est effectuée selon l'équation ci-dessus en remplaçant les bornes infinies de l'intégrale ci-dessus par des bornes à valeurs finies.

Pour une application donnée (une bande B de fréquence fixée, un nombre de porteuses M et une constellation $2^{2Q}$-*QAM* donnés), l'OFDM est caractérisé par une efficacité spectrale fixe quelle que soit la longueur de la trame. En revanche, l'efficacité spectrale d'un signal OFDM/OQAM à support borné est donnée par l'expression :

$$\varsigma = \frac{K}{K + q - 0,5} \cdot \frac{2Q.M.B}{T} \text{ (bits/s/Hz)},$$

avec

- $K$ le nombre de symboles par trame ;
- $M$ le nombre de fréquences porteuses ;
- $L = qT$ la longueur du filtre prototype, $q$ étant le facteur de recouvrement ;
- Q : le paramètre définissant l'ordre d'une constellation QAM d'origine et celle de la PAM ($2^Q$) utilisée pour les données $a_{m,n}$.

Cette expression suppose que la trame est de longueur suffisante pour pouvoir réaliser la démodulation selon l'équation précédente lorsque les bornes de l'intégrale sont finies.

Implicitement, l'expression de l'efficacité spectrale ci-dessus suppose également que si les « symboles de bords » sont tronqués, les données réelles correspondantes, ne sont pas récupérables.

Ainsi, au regard de cette expression, plus la trame est longue plus l'efficacité spectrale devient élevée et asymptotiquement indépendante de la longueur de la trame et du facteur de recouvrement q. Cependant, on remarque également que la perte en efficacité spectrale devient critique pour de courtes trames.

En effet, pour une transmission multiporteuse sous forme de paquets, du fait des filtres de mise en forme, également appelés filtres prototypes, s'étalant sur plusieurs symboles, le support de transmission nécessaire excède en durée celle strictement limitée à la durée des symboles utiles à transmettre.

Pour résoudre ce problème de perte en efficacité spectrale, une solution visant à atténuer les effets de bord par introduction d'une fonction de pondération a notamment été décrite dans le document « OFDM and FBMC transmissions techniques : a compatible high performance proposal for broadband power line communications » M. Bellanger, M. Renfors, T. Ihalainen et C.A.F da Rocha, 2010 IEEE International Symposium on Power Line Communications and Its Applications (ISPLS) pp. 154-159, 2010. Cependant, cette technique augmente le coût de la procédure de récupération des symboles aux extrémités qui, dans ce cas, sont seulement approximativement récupérés.

Une autre solution a été proposée dans le document « Packet Transmission for Overlapped Offset QAM » Y. Dandach et P. Siohan, IEEE International Conference on Wireless Communications and Signal Processing (ICWCSP), Suzhou, China, Oct. 2010. La technique de ce document permet notamment une récupération parfaite dans le cas d'un filtre prototype court dont la longueur temporelle $L_t = T,$ ce qui en terme de « fenêtre » de filtrage revient à un filtre de longueur de fenêtre $L = M.$

Plus précisément, selon ce document, on considère donc le cas critique d'une trame courte, en d'autres termes avec une faible valeur de K, avec un filtre prototype court dont la longueur $L_t = T.$

Au regard de l'expression de l'efficacité spectrale précédemment mentionnée, on remarque que celle-ci diminue pour une valeur de K faible notamment du fait du facteur limitant pour $q$=1, $\dfrac{K}{K+0.5}$.

L'objectif de la technique présentée selon le document « Packet Transmission for Overlapped Offset QAM » Y. Dandach et P. Siohan, IEEE International Conference on Wireless Communications and Signal Processing (ICWCSP), Suzhou, China, Oct. 2010, est donc de s'affranchir de ce facteur limitant.

Cet affranchissement revient à considérer une troncature de la trame, c'est-à-dire une perte de $M$ données réelles par trame, ce qui équivaut à $M/2$ données complexes. Pour un filtre prototype court dont la longueur $L_t = T,$ la donnée affectée par la troncature est $a_{m,1}$. En revanche, la donnée $a_{m,0}$ n'est pas affecté par cette troncature et peut alors être récupéré parfaitement lors de la démodulation en utilisant l'expression du produit scalaire mentionnée précédemment.

Cependant, la troncature affectant la démodulation de la donnée tronquée $a_{m,1}$ par création d'interférence interporteuse (ICI de l'anglais « Inter Carrier Interference »), le document Dandach propose de ne transmettre pour ces données tronquées que les porteuses dont l'indice $m$ est pair ou impair, ce qui revient, en d'autres termes, à annuler la moitié des sous-porteuses.

Jusqu'ici, cette technique basée sur l'annulation de la moitié des porteuses (paires ou impaires) des données de bord affectées par la troncature, bien que valable théoriquement, n'a pas été développée au-delà de l'approche en temps continu décrite ci-dessus. En outre, ce document ne divulgue ni ne suggère une implémentation concrète, en numérique, efficace d'un modulateur et d'un démodulateur permettant de garantir une bonne efficacité spectrale tout en limitant les problèmes d'interférence.

Il existe donc un besoin pour une nouvelle technique de modulation délivrant des signaux multiporteuses de type OFDM/OQAM dont l'implémentation est optimisée, notamment en termes de complexité, et délivrant des symboles OFDM/OQAM aptes à être transmis selon un schéma de transmission par bloc, comme pour l'OFDM, ou par paquets.

## 3. Exposé de l'invention

L'invention propose une solution nouvelle qui ne présente pas l'ensemble de ces inconvénients de l'art antérieur, sous la forme d'un procédé de modulation d'un train de données réelles, mettant en oeuvre un filtre prototype de longueur inférieure ou égale à M et délivrant des symboles OFDM/OQAM.

Selon l'invention, les données réelles sont regroupées en blocs de données de $nb.M$ données réelles, où M est le nombre de porteuses d'un des blocs de symboles OFDM/OQAM et $nb$ un entier supérieur ou égal à 2.

En outre, le procédé selon l'invention comprend, pour un bloc de données réelles, les étapes suivantes :

- première modulation par un premier modulateur des $M/2$ premières données du bloc de données réelles, délivrant un premier ensemble de porteuses modulées ;
- deuxième modulation par un deuxième modulateur des $(nb-1).M$ données suivantes du bloc de données réelles, délivrant un deuxième ensemble de $(nb-1).M$ porteuses modulées ;
- troisième modulation par un troisième modulateur des $M/2$ dernières données du bloc de données réelles, délivrant un troisième ensemble de porteuses modulées ;

- superposition des premier, deuxième et troisième ensembles de porteuses modulées, après application de décalages temporels, de façon à former un bloc de symboles OFDM/OQAM de longueur $nb.M/2$, le premier ensemble étant superposé temporellement avec le début du deuxième ensemble et le troisième ensemble étant superposé temporellement avec la fin du deuxième ensemble.

Ainsi, l'invention repose sur une approche nouvelle et inventive de la modulation d'un train de données réelles délivrant des blocs de symboles OFDM/OQAM, présentant une complexité réduite et permettant une implémentation adaptée à une transmission par blocs de symboles OFDM/OQAM.

En effet, l'utilisation de tels modulateurs permet une transmission OFDM/OQAM par blocs ou encore par paquets ($nb > 2$), notamment des blocs ou des paquets de faible longueur, tout en garantissant une réduction de la complexité des opérations effectuées lors de la modulation, du fait qu'un modulateur selon l'invention effectue un traitement distinct des « bords » d'un bloc de données au regard de la partie centrale de ce bloc de données.

La définition des différents ensembles de données auxquelles s'appliquent respectivement les différentes modulations revient à appliquer un découpage particulier d'un bloc de données en trois sous-blocs, le premier et le dernier sous-bloc comprenant respectivement les M/2 premières et dernières données du bloc et représentant ainsi les « sous-blocs de bords » du bloc de données à moduler.

La solution selon l'invention est également applicable à un système de transmission biorthogonal utilisant des bancs de filtres (FBMC/OQAM).

L'expression « bloc de données » englobe donc à la fois la notion de « bloc élémentaire » lorsque le bloc de données est de taille $2.M$ ($nb$=2), et la notion de « paquet » de données lorsque le bloc de données est de taille $nb.M$ avec $nb>2$.

Le terme « modulation » selon l'invention comprend toutes les opérations mises en oeuvre afin de transformer le train de données réelles en porteuses modulées constituant des symboles OFDM/OQAM prêts à être transmis selon une transmission par bloc.

Par ailleurs, les termes « début » et « fin » de l'étape de superposition selon l'invention signifient que les $M/2$ porteuses modulées du premier ensemble sont superposées avec les $M/2$ premières porteuses du deuxième ensemble, et que les $M/2$ porteuses du troisième ensemble sont superposées avec les $M/2$ dernières porteuses du deuxième ensemble.

En outre, le procédé de modulation selon l'invention met en oeuvre un filtre prototype de longueur inférieure ou égale à $M$. On peut notamment utiliser un filtre prototype de longueur $L=M$, c'est-à-dire dont la fenêtre temporelle de filtrage est égale à $T$, $T$ étant la durée d'un symbole. Un tel filtre prototype permet notamment d'assurer l'orthogonalité du système. Il est à noter que la mise en oeuvre d'un filtre prototype de longueur inférieure à $M$ ($L<M$) introduit certes une perte d'orthogonalité du système, mais celle-ci peut être compensée par des techniques classiques, par exemple en remplaçant les coefficients de bord (d'indice $L-M$) des filtres orthogonaux par quelques zéros, en d'autres termes en ajoutant des coefficients de filtre nuls de sorte à obtenir un filtre de longueur $L=M$.

Selon une caractéristique particulière de l'invention, le procédé de modulation selon l'invention comprend une étape de commutation alimentant, pour chaque bloc de données réelles :

- l'entrée du premier modulateur avec les $M/2$ premières données du bloc de données réelles ;
- l'entrée du deuxième modulateur avec les $(nb-1).M$ données suivantes du bloc de données réelles ;
- l'entrée du troisième modulateur avec $M/2$ dernières données du bloc de données réelles.

Ainsi, selon cet aspect particulier, l'invention prévoit un cadencement de mise en oeuvre respective des trois modulateurs. Il est à noter qu'il est possible de réaliser une commutation successive, continue ou encore discontinue entre les trois modulateurs. En outre, il est également envisageable de traiter d'abord les bords, à savoir la mise en oeuvre des premier et troisième modulateurs puis le deuxième modulateur.

Selon un autre aspect particulier de l'invention, les première et troisième modulations mettent en oeuvre des transformées de Fourier rapides directes ou inverses rapides (FFT ou IFFT) alimentées par M données parallèles, dont une sur deux est forcée à zéro.

Cette mise en oeuvre permet notamment de réduire la complexité des transformées de Fourier directes ou inverses rapides mises en oeuvre par les premier et troisième modulateurs.

En effet, selon cet aspect particulier de l'invention une entrée sur deux des transformées de Fourier rapides directes ou inverses sont forcés à zéro ce qui réduit le nombre d'opérations mises en oeuvre par les premier et troisième modulateurs.

Il est possible selon l'invention d'utiliser pour la modulation une transformée de Fourier rapide directe ou inverse. Les modifications devant respectivement être mises en oeuvre pour l'application de l'une ou l'autre de ces transformées directe ou inverse lors de la modulation sont notamment décrites dans le document « Application de la théorie des bancs

EP 2 803 174 B1

de filtres à l'analyse et à la conception de modulations multiporteuses orthogonales et biorthogonales », C. Siclet, Université de Rennes 1 (France), thèse de Doctorat, soutenue le 18 Novembre 2002, et correspondent essentiellement à des modifications des termes de phase mis en oeuvre.

Selon un aspect particulier de l'invention, le procédé met en oeuvre un filtre prototype de longueur inférieure ou égale à M réalisant deux types de filtrage distincts, l'un appliqué au deuxième ensemble de *(nb-1).M* porteuses modulées, et l'autre appliqué au premier ensemble de porteuses modulées et au troisième ensemble de porteuses modulées délivrant un premier et un troisième ensembles comprenant chacun $M/2$ porteuses modulées filtrées.

Ainsi, l'invention permet l'utilisation d'un même filtre prototype appliqué aux premier, deuxième et troisième ensembles de porteuses modulées et donc la réduction de la complexité de l'étape de filtrage.

En effet, du fait du traitement de modulation préalablement effectué le filtrage des premier et troisième ensembles de porteuses modulées se limite à $M/2$ opérations de multiplication, tandis que le filtrage mis en oeuvre pour le deuxième ensemble de *(nb-1).M* porteuses modulées, revient à appliquer *(nb-1)* fois un filtrage conventionnel de longueur $L=M$ sur le deuxième ensemble de porteuses modulées.

Selon un autre aspect de l'invention, les première et troisième modulations mettent respectivement en oeuvre une expansion des $M/2$ premières données du bloc de données réelles et des $M/2$ dernières données du bloc de données réelles, l'expansion consistant à insérer un zéro entre chacune des $M/2$ premières données du bloc et chacune des $M/2$ dernières données du bloc de données réelles, délivrant respectivement, en entrée des transformées de Fourier rapides directe ou inverse des première et troisième modulations, $M$ premières données expansées du bloc et $M$ dernières données expansées du bloc de données réelles, dont une sur deux est forcée à zéro.

Cette étape d'expansion permet notamment d'utiliser les convertisseurs série/parallèle classiques d'un modulateur et de forcer à zéro les entrées des transformées de Fourier rapides, directe ou inverse, correspondantes.

Selon un autre aspect particulier de l'invention, la première modulation comprend les sous-étapes successives suivantes :

- expansion des $M/2$ premières données du bloc, l'expansion consistant à insérer un zéro entre chacune des $M/2$ premières données du bloc, délivrant $M$ premières données expansées du bloc de données réelles,
- conversion série/parallèle des $M$ premières données expansées du bloc de données réelles, délivrant $M$ données parallèles en sortie d'un premier convertisseur série/parallèle,
- mise en oeuvre d'une transformée de Fourier rapide directe ou inverse (FFT ou IFFT) alimentée par les $M$ données parallèles en sortie du premier convertisseur série/parallèle, dont une sur deux est forcée à zéro par l'opération d'expansion des $M/2$ premières données, délivrant $M$ premières porteuses modulées,
- filtrage appliqué aux $M$ premières porteuses modulées, délivrant $M/2$ premières porteuses modulées filtrées,
- conversion parallèle/série des $M/2$ premières porteuses modulées filtrées délivrant le premier ensemble de porteuses modulées,

la deuxième modulation comprend les sous-étapes successives suivantes :

- conversion série/parallèle desdites *(nb-1).M* données suivantes du bloc de données réelles, délivrant *(nb-1).M* données parallèles en sortie d'un deuxième convertisseur série/parallèle,
- mise en oeuvre de *(nb-1)* transformées de Fourier rapides directes ou inverses (FFT ou IFFT) successives alimentées par lesdites *(nb-1).M* données parallèles données parallèles en sortie dudit deuxième convertisseur série/parallèle, délivrant *(nb-1).M* deuxièmes porteuses modulées,
- filtrage de longueur $M$ appliqué audites *(nb-1).M* deuxièmes porteuses modulées, délivrant *(nb-1)* ensembles de $M$ deuxièmes porteuses modulées filtrées,
- conversion parallèle/série des *(nb-1)* ensembles de $M$ deuxièmes porteuses modulées filtrées délivrant le deuxième ensemble de *(nb-1).M* porteuses modulées,

et la troisième modulation comprend les sous-étapes successives suivantes :

- expansion des $M/2$ dernières données du bloc, l'expansion consistant à insérer un zéro entre chacune des $M/2$ dernières données du bloc de données réelles, délivrant M troisièmes données expansées du bloc ;
- conversion série/parallèle des $M$ troisièmes données expansées du bloc de données réelles, délivrant $M$ données parallèles en sortie d'un troisième convertisseur série/parallèle,
- mise en oeuvre d'une transformée de Fourier rapide directe ou inverse (FFT ou IFFT) alimentées par les $M$ données parallèles en sortie du troisième convertisseur série/parallèle, dont une sur deux est forcée à zéro par l'opération d'expansion des $MI2$ dernières données, délivrant $M$ troisièmes porteuses modulées,
- filtrage appliqué aux $M$ troisièmes porteuses modulées, délivrant $MI2$ troisièmes porteuses modulées filtrées,
- conversion parallèle/série des $M/2$ troisièmes porteuses modulées filtrées délivrant le troisième ensemble de porteuses modulées.

Ainsi, tous les modules traditionnels mis en oeuvre par le modulateur à savoir les convertisseurs série/parallèle, opérateurs utilisant des transformées de Fourier directes ou inverses, convertisseurs parallèle/série, mettent en oeuvre un traitement spécifique pour chacun des trois « sous-blocs » du bloc de données de $nb.M$ données réelles.

Ce traitement sélectif permet d'effectuer un traitement de modulation sélectif des bords d'un bloc élémentaire de données réelles au regard de la partie centrale de ce bloc élémentaire de données réelles.

Il est à noter que pour l'étape de mise en oeuvre de $(nb-1)$ transformées de Fourier rapides directes ou inverses (FFT ou IFFT) successives alimentées par les $(nb-1).M$ données parallèles en sortie du deuxième convertisseur série/parallèle, délivrant $(nb-1).M$ deuxièmes porteuses modulées, est effectuée sur $(nb-1)$ durées $T$.

Selon un mode de réalisation, le procédé selon l'invention comprend en outre une étape de multiplication par un facteur égal à $\sqrt{2}$ de l'amplitude des $M/2$ premières données du bloc de données réelles et des $M/2$ dernières données du bloc de données réelles.

Cette étape d'amplification par multiplication permet de compenser la réduction de puissance introduite au modulateur du fait de l'annulation d'une sous-porteuse sur deux. Le facteur $\sqrt{2}$ vise en particulier à répartir équitablement l'amplification entre l'émission et la réception afin d'éviter une amplification du bruit en réception.

Avantageusement, les première et troisième modulations mettent en oeuvre des transformées de Fourier rapide directe ou inverse (FFT ou IFFT) alimentées par M données parallèles, dont les données parallèles d'indice impair sont forcées à zéro.

Ainsi, selon cette implémentation particulière, seulement un quart des sorties de la transformée de Fourier rapide direct ou inverse utilisée pour la première et la troisième modulation est nécessaire pour calculer la totalité des sorties, permettant ainsi de réduire la complexité globale du système.

L'invention concerne également un procédé de démodulation d'un signal multiporteuse de type OFDM/OQAM comprenant des symboles OFDM/OQAM obtenus par le procédé de modulation précédemment décrit. Un tel procédé de démodulation met en oeuvre un filtre prototype de longueur inférieure ou égale à M et délivrant un train de données réelles.

Selon l'invention, les données réelles délivrées par la démodulation sont regroupées en blocs de données de $nb.M$ données réelles, où $M$ est le nombre de porteuses d'un des symboles OFDM/OQAM et $nb$ un entier supérieur ou égal à 2.

En outre selon l'invention, le procédé de démodulation comprend, pour un bloc de symboles OFDM/OQAM de longueur $nb.M/2$ reçu, les étapes suivantes :

- extraction de premier, deuxième et troisième ensembles de porteuses modulées du bloc de symboles OFDM/OQAM, après application de décalages temporels, de façon à obtenir un premier ensemble de $M/2$ premières porteuses modulées, un deuxième ensemble de $nb.M/2$ porteuses modulées, et un troisième ensemble de $M/2$ dernières porteuses modulées ;
- première démodulation par un premier démodulateur du premier ensemble de $M/2$ premières porteuses modulées délivrant $M/2$ premières données d'un bloc de données réelles correspondant au symbole OFDM/OQAM reçu ;
- deuxième démodulation par un deuxième démodulateur du deuxième ensemble de $nb.M/2$ porteuses modulées délivrant $(nb-1).M$ données suivantes du bloc de données réelles ;
- troisième démodulation par un troisième démodulateur du troisième ensemble de $M/2$ dernières porteuses modulées délivrant $M/2$ dernières données du bloc de données réelles.

Selon un autre aspect, l'invention concerne également un dispositif de modulation d'un train de données réelles, mettant en oeuvre un filtre prototype de longueur inférieure ou égale à M et délivrant des blocs de symboles OFDM/OQAM.

Selon l'invention, les données réelles sont regroupées en blocs de données de $nb.M$ données réelles, où $M$ est le nombre de porteuses d'un des blocs de symboles OFDM/OQAM et $nb$ un entier supérieur ou égal à 2.

En outre, un dispositif de modulation selon l'invention comprend les moyens suivants mis en oeuvre pour un bloc de données réelles :

- des premiers moyens de modulation par un premier modulateur des $M/2$ premières données du bloc de données réelles, délivrant un premier ensemble de porteuses modulées ;
- des deuxièmes moyens de modulation par un deuxième modulateur des $(nb-1).M$ données suivantes du bloc de données réelles, délivrant un deuxième ensemble de $(nb-1).M$ porteuses modulées ;
- des troisièmes moyens de modulation par un troisième modulateur des $M/2$ dernières données du bloc de données réelles, délivrant un troisième ensemble de porteuses modulées ;
- des moyens de superposition des premier, deuxième et troisième ensembles de porteuses modulées, après application de décalages temporels, de façon à former un blocs de symbole OFDM/OQAM de longueur $nb.M/2,$ le premier ensemble étant superposé temporellement avec le début du deuxième ensemble et que le troisième ensemble étant superposé temporellement avec la fin du deuxième ensemble.

Un tel dispositif de modulation est notamment adapté à mettre en oeuvre le procédé de modulation précédemment décrit.

Un tel dispositif de modulation peut bien sûr comporter les différentes caractéristiques relatives au procédé de modulation selon l'invention, qui peuvent être combinées ou prises isolément. Ainsi, les caractéristiques et avantages de ce dispositif de modulation sont similaires à ceux du procédé de modulation, et ne sont donc pas détaillés plus amplement.

Selon encore un autre aspect, l'invention concerne un dispositif de démodulation d'un signal multiporteuse de type OFDM/OQAM comprenant des blocs de symboles OFDM/OQAM obtenus par le procédé de modulation précédemment décrit, mettant en oeuvre un filtre prototype de longueur inférieure ou égale à $M$ et délivrant un train de données réelles,

Selon l'invention, les données réelles délivrées sont regroupées en blocs de données de $nb.M$ données réelles, où $M$ est le nombre de porteuses d'un des blocs de symboles OFDM/OQAM et $nb$ un entier supérieur ou égal à 2,

En outre, un tel dispositif de démodulation comprend, pour un bloc de symboles OFDM/OQAM de longueur $nb.M/2$ reçu :

- des moyens d'extraction de premier, deuxième et troisième ensembles de porteuses modulées du bloc de symboles OFDM/OQAM, après application de décalages temporels, de façon à obtenir un premier ensemble de $M/2$ premières porteuses modulées, un deuxième ensemble de $nb.M/2$ porteuses modulées, et troisième ensemble de $M/2$ dernières porteuses modulées ;
- des premiers moyens de démodulation par un premier démodulateur du premier ensemble de $M/2$ premières porteuses modulées délivrant $M/2$ premières données d'un bloc de données réelles correspondant au bloc de symboles OFDM/OQAM reçu ;
- des deuxièmes moyens de démodulation par un deuxième démodulateur du deuxième ensemble de $nb.M/2$ porteuses modulées délivrant *(nb-1).M* données suivantes du bloc de données réelles ;
- des troisièmes moyens de démodulation par un troisième démodulateur du troisième ensemble de $M/2$ dernières porteuses modulées délivrant $M/2$ dernières données du bloc de données réelles.

Un tel dispositif de démodulation est notamment adapté à mettre en oeuvre le procédé de démodulation précédemment décrit.

L'invention concerne également un programme d'ordinateur comportant des instructions pour la mise en oeuvre d'un procédé de modulation ou de démodulation tels que décrits précédemment lorsque le programme est exécuté par un processeur.

En effet, le procédé de modulation ou de démodulation selon l'invention peut être mis en oeuvre de diverses manières, notamment sous forme intégrée, câblée et/ou sous forme logicielle.

### 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :

- la figure 1, décrite en relation avec l'art antérieur, présente un schéma de modulation OFDM/OQAM classique ;
- la figure 2 illustre le procédé de modulation selon un mode de réalisation de l'invention ;
- les figures 3A et 3B représentent les blocs de symboles générés par le modulateur OFDM/OQAM selon l'invention pour différentes tailles de blocs de données réelles à savoir *nb=2,* ou *nb=4 ;*
- la figure 4 illustre le procédé de démodulation selon un mode de réalisation de l'invention ;
- les figures 5 et 6 représentent respectivement l'algorithme mis en oeuvre pour une IFFT et une FFT selon un mode de réalisation particulier de l'invention ;
- les figures 7 et 8 présentent la structure simplifiée d'un modulateur et d'un démodulateur mettant respectivement en oeuvre une procédé de modulation et un procédé de démodulation selon un mode de réalisation de l'invention ;
- la figure 9 montre les performances obtenues pour différentes tailles de blocs de données.

**5. Description d'un mode de réalisation de l'invention**

*5.1 Principe général*

L'invention se place dans le contexte des systèmes de transmission mettant en oeuvre une modulation de type OFDM/OQAM ou BFDM/OQAM et mettant en oeuvre des filtres prototype de longueur inférieure ou égale à *M,* et propose une technique permettant de délivrer des symboles OFDM/OQAM aptes à être transmis par blocs.

On note que ces systèmes de modulation, qui peuvent être implémentés sous forme de bancs de filtres, ils sont également appelés FBMC/OQAM (en anglais « *Filter Bank Multicarrier/OQAM* »).

Le principe général de l'invention repose sur une modulation sélective et distincte « des bords » d'un bloc au regard de la partie centrale de ce bloc de données.

Pour y parvenir, l'invention définit différents sous-ensembles de données d'un bloc de données considéré, dont la taille correspond à la taille des blocs souhaités pour la transmission OFDM/OQAM par blocs.

Selon l'invention, l'expression « bloc de données » englobe à la fois la notion de « bloc élémentaire » lorsque le bloc de données est de taille *2M* (*nb=2*), et la notion de « paquet » de données lorsque le bloc de données est de taille *nb.M* avec *nb>2.*

A chacun de ces ensembles est appliquée une modulation différente, ce qui peut être assimilé à l'application d'un découpage supplémentaire d'un bloc de données en trois sous-blocs, le premier et le dernier sous-bloc comprenant les *M/2* premières et dernières données du bloc de données considéré et représentant ainsi les « sous-blocs de bords » du bloc de données à moduler.

Comme on le verra par la suite, l'utilisation d'un traitement sélectif des bords au regard de la partie centrale du bloc de données permet de réduire la complexité de l'ensemble des opérations mises en oeuvre par le système de modulation, ce qui va à l'encontre des *a priori* de l'Homme du métier qui aurait au contraire estimé que mettre en oeuvre un traitement supplémentaire et distinct des bords au regard de la partie centrale du bloc de données, aurait abouti à une augmentation de la complexité mise en oeuvre.

*5.2 Exemple de mise en oeuvre*

*5.2.1 Système de modulation*

Sur la base du système de modulation illustré par la figure 1, déjà décrite en relation avec l'art antérieur, les inventeurs de la présente demande de brevet, également inventeurs de la demande de brevet français FR 1151590 déposée le 28 février 2011 au nom du même Demandeur, ont mis en évidence dans la demande de brevet précitée des relations particulières entre les différentes sorties des modules de transformation fréquence/temps 12 et de filtrage polyphase 13 mis en oeuvre en émission.

Plus précisément, ils ont démontré que les sorties du module de transformation fréquence/temps sont conjuguées deux à deux, et les composantes polyphases du filtre prototype sont para-conjuguées deux à deux.

En outre, selon le document précédemment cité « Packet Transmission for Overlapped Offset QAM » Y. Dandach et P. Siohan, IEEE International Conference on Wireless Communications and Signal Processing (ICWCSP), Suzhou, China, Oct. 2010, dont les auteurs sont également les inventeurs de la présente demande de brevet, il a été également démontré qu'annuler la moitié des porteuses de symboles OFDM/OQAM tronqués lors de la transmission, permet à la démodulation une récupération de l'ensemble de symboles OFDM/OQAM transmis.

Il est donc possible d'utiliser cette symétrie et ces propriétés pour réutiliser une partie des résultats des multiplications survenant à des instants de filtrage différents, et réduire ainsi la complexité du filtrage et en conséquence la complexité globale du système.

Il est également possible, selon l'invention, d'utiliser ces relations pour réduire la complexité du modulateur par blocs dont chaque bloc contient l'équivalent d'un symbole OFDM, i.e. *M* données complexes.

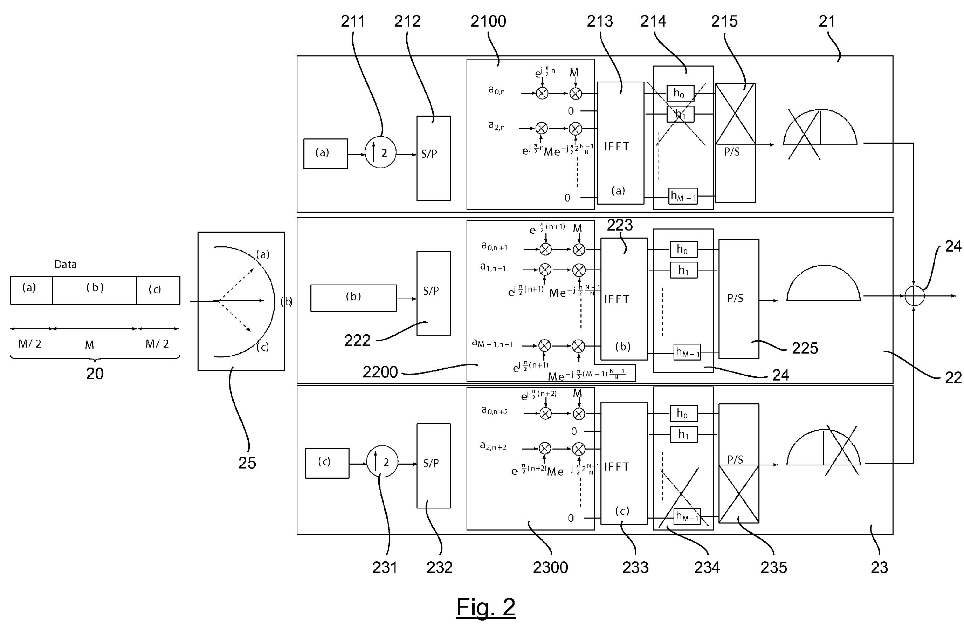

La figure 2 illustre le principe de modulation d'un train de données réelles délivrant des symboles OFDM/OQAM aptes à être transmis par bloc de *nb.M* données. Par exemple, pour le cas représenté en relation avec la figure 2, on considère que *nb=2,* c'est-à-dire que le train de données est découpé en « bloc élémentaire » de taille *2M.*

Selon cette implémentation de l'invention, on suppose notamment que les données d'entrée du modulateur correspondent à des symboles OQAM réels issus de constellations QAM.

Le modulateur bloc met donc en oeuvre le procédé de modulation selon l'invention en implémentant principalement, pour un bloc de données réelles (20), les étapes suivantes :

- première modulation (21) par un premier modulateur des *M/2* premières données (a) du bloc de données réelles (20), délivrant un premier ensemble de porteuses modulées ;
- deuxième modulation (22) par un deuxième modulateur des *(nb-1).M* données suivantes (b) du bloc de données réelles (20), délivrant un deuxième ensemble de *(nb-1).M* porteuses modulées ;

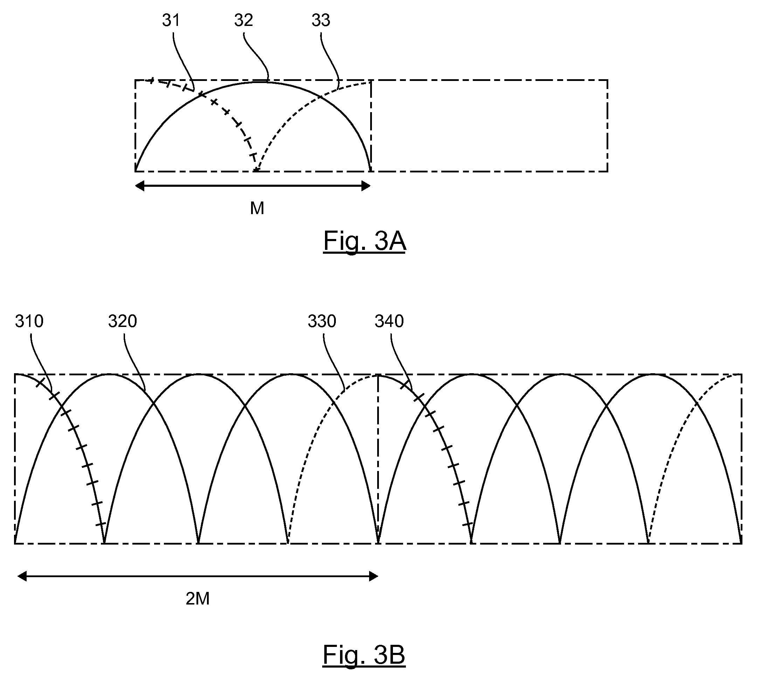

- troisième modulation (23) par un troisième modulateur des *M/2* dernières données (c) du bloc de données réelles (20), délivrant un troisième ensemble de porteuses modulées ;
- superposition (24) des premier, deuxième et troisième ensembles de porteuses modulées, après application de décalages temporels, de façon à former un bloc de symboles OFDM/OQAM de longueur *nb.M/2,* le premier ensemble étant superposé temporellement avec le début du deuxième ensemble et le troisième ensemble étant superposé temporellement avec la fin du deuxième ensemble, tel qu'illustré respectivement par la figure 3A.

En relation avec la figure 3A pour *nb=2,* on remarque notamment que les *M/2* porteuses modulées du premier ensemble (31, représenté en ligne « hachurée ») sont superposées (24) avec les *M/2* premières porteuses modulées du deuxième ensemble (32, représenté en ligne continue), et que les *M/2* porteuses modulées du troisième ensemble (33, représenté en ligne pointillée) sont superposées avec les *M/2* dernières porteuses modulées du deuxième ensemble (32, représenté en ligne continue). Cette superposition forme ainsi un bloc, dit « bloc élémentaire » de longueur *M* de comprenant un symbole OFDM/OQAM délivré par la modulation selon l'invention d'un bloc de *2.M* données réelles. Un tel « bloc élémentaire » comprend donc *2.M* porteuses modulées superposées sur une longueur *M* du bloc élémentaire.

En outre, selon le mode de réalisation représenté en relation avec la figure 2, le procédé de modulation selon l'invention comprend une étape de commutation (25) alimentant, pour chaque bloc :

- l'entrée du premier modulateur avec les *M/2* premières données (a) du bloc (20) ;
- l'entrée du deuxième modulateur avec les *(nb-1).M* données (b) suivantes du bloc (20) ;
- l'entrée du troisième modulateur avec *M/2* dernières données (c) du bloc (20).

Cette commutation instaure une cadence, en alimentant le premier modulateur sur une durée *T/2,* le deuxième modulateur sur une durée *(nb-1).T,* et le troisième modulateur sur une durée *T/2*.

Ainsi, l'application d'une modulation différente à trois ensembles de données distincts du bloc (20), peut être assimilée à l'application d'un découpage supplémentaire d'un bloc de données en trois sous-blocs, le premier (a) et le dernier (c) sous-bloc comprenant les *M/2* premières et dernières données du bloc (20) de données considéré et représentant ainsi les « sous-blocs de bords » du bloc de données à moduler.

Par ailleurs et plus précisément, la première modulation (21) comprend les sous-étapes successives suivantes :

- expansion (211) des *M/2* premières données (a) du bloc de données réelles (20), l'expansion consistant à insérer un zéro entre chacune des *M/2* premières données du bloc (20), délivrant *M* premières données expansées du bloc (20) ;
- conversion série/parallèle (212) des *M* premières données expansées du bloc de données réelles (20), délivrant *M* données parallèles en sortie d'un premier convertisseur série/parallèle ;
- mise en oeuvre d'une transformée de Fourier rapide inverse (213) alimentée par les *M* données parallèles en sortie du premier convertisseur série/parallèle, dont une sur deux est forcée à zéro par l'opération d'expansion des *M/2* premières données, délivrant *M* premières porteuses modulées ;
- filtrage (214) appliqué aux *M* premières porteuses modulées, délivrant *M/2* premières porteuses modulées filtrées ;
- conversion (215) parallèle/série des *M/2* premières porteuses modulées filtrées délivrant un premier ensemble de porteuses modulées (31) tel que représenté en ligne « hachurée » sur la figure 3A.

Par ailleurs, selon ce mode de réalisation et de manière classique, en considérant par exemple une filtre prototype de longueur *L=M,* les données expansées issues de l'étape d'expansion (211) sont au préalables multipliées (2100) par les termes $e^{j\frac{\pi}{2}pt}$ avec *pt* représentant l'indice temporel, et $Me^{-j\frac{\pi}{2}.2m\frac{N-1}{N}}$ avec *m*, l'indice de la donnée considérée. Il est à noter que selon d'autres modes de réalisation, non représentés, des schémas non causaux utilisant des multiplications par des exponentielles différentes pourraient également être utilisés.

En outre, comme indiqué précédemment au regard du document « Application de la théorie des bancs de filtres à l'analyse et à la conception de modulations multiporteuses orthogonales et biorthogonales », C. Siclet, Université de Rennes 1 (France), thèse de Doctorat, soutenue le 18 Novembre 2002, il est possible d'utiliser à la place de l'IFFT représentée sur la figure 2 une FFT.

Par ailleurs, la deuxième modulation (22) comprend les sous-étapes successives suivantes :

- conversion série/parallèle (222) des *(nb-1).M* données suivantes (b) du bloc de données réelles (20), délivrant *(nb-1).M* données parallèles en sortie d'un deuxième convertisseur série/parallèle,
- mise en oeuvre de *(nb-1)* transformées de Fourier rapides inverses (223) successives alimentées par les *(nb-1).M* données parallèles données parallèles en sortie du deuxième convertisseur série/parallèle, délivrant *(nb-1).M* deuxièmes porteuses modulées, c'est-à-dire sur *(nb-1)* durées *T,* dans le cas où *nb=2* ici représenté une seule transformée de Fourier rapide inverse est donc mise en oeuvre, et dans le cas non représenté où *nb=4,* trois transformées de Fourier rapides inverses seraient mises en oeuvre,

- filtrage de longueur *M* (224) appliqué aux *(nb-1).M* deuxièmes porteuses modulées, délivrant *(nb-1)* ensembles de *M* deuxièmes porteuses modulées filtrées,
- conversion (225) parallèle/série des *(nb-1)* ensembles de *M* deuxièmes porteuses modulées filtrées délivrant le deuxième ensemble de *(nb-1).M* porteuses modulées.

De même que mentionné ci-dessus, les données en entrée du module de transformée de Fourier rapide inverse utilisé (22) sont au préalable multipliées (2200) par des termes en exponentielle tels que ceux mentionnés par exemple ci-dessus.

En outre, comme indiqué précédemment il est également possible d'utiliser à la place de la transformée de Fourier rapide inverse (IFFT) représentée sur la figure 2 une transformée de Fourier rapide directe (FFT).

En outre la troisième modulation (23) comprend les sous-étapes successives suivantes :

- expansion (231) des *M*/2 dernières données (c) du bloc de données réelles, l'expansion consistant à insérer un zéro entre chacune des *M*/2 dernières données (c) du bloc (20), délivrant M troisièmes données expansées du bloc ;
- conversion série/parallèle (232) des *M* troisièmes données expansées du bloc de données réelles, délivrant *M* données parallèles en sortie d'un troisième convertisseur série/parallèle,
- mise en oeuvre d'une transformée de Fourier rapide inverse (233) alimentées par les *M* données parallèles en sortie du troisième convertisseur série/parallèle, dont une sur deux est forcée à zéro par l'opération d'expansion des *M*/2 dernières données (c), délivrant *M* troisièmes porteuses modulées,
- filtrage (234) appliqué au *M* troisièmes porteuses modulées, délivrant *M*/2 troisièmes porteuses modulées filtrées,
- conversion parallèle/série (235) des *M*/2 troisièmes porteuses modulées filtrées délivrant le troisième ensemble de porteuses modulées.

De même que mentionné ci-dessus, les données en entrée du module de transformée de Fourier rapide inverse utilisé (233) sont au préalable multipliées (2300) par des termes en exponentielle tels que ceux mentionnés par exemple ci-dessus.

En outre, comme indiqué précédemment il est également possible d'utiliser à la place de la transformée de Fourier rapide inverse (IFFT) représentée sur la figure 2 une transformée de Fourier rapide directe (FFT).

Selon ce mode de réalisation particulier, les sorties des trois convertisseurs série/parallèle (212, 222, 232) vont alimenter respectivement les trois entrées des modules de transformée de Fourier rapide directe ou inverse (213, 223, 233).

Selon le mode de réalisation représenté en relation avec la figure 2, les premier et troisième modules de transformée de Fourier fonctionnent en alimentant respectivement les trois entrées des modules de transformée de Fourier rapide directe ou inverse (213, 223, 233) sur une durée *T, (nb-1). T,* et *T.*

En effet, selon le mode de réalisation représenté en relation avec la figure 2, les données d'entrée de chaque sous-bloc (a), (b) (c) notées $a_{m,n+i}$ avec *i = 0,1 ou 2* sont traitées à des instants multiples de *T/2.*

L'ensemble de ces traitements produit en sortie le signal OFDM/OQAM constitué de blocs indépendants représenté à la figure 3A.

En outre, du fait du décalage de *T/2* en entrée des transformées de Fourier rapide inverse IFFT (ou directe FFT), la superposition s'effectue bien en tenant compte de ce décalage non représenté sur la figure 2.

Par ailleurs, la figure 3B représente les symboles générés par le modulateur OFDM/OQAM selon l'invention pour *nb=4* c'est-à-dire pour un bloc de données réelles comprenant *4.M* données. On remarque notamment que les *M*/2 porteuses modulées du premier ensemble (310, représenté en ligne « hachurée ») sont superposées (24) avec les *M*/2 premières porteuses modulées du deuxième ensemble (320, représenté en ligne continue), et que les *M*/2 porteuses modulées du troisième ensemble (330, représenté en ligne pointillée) sont superposées avec les *M*/2 dernières porteuses modulées du deuxième ensemble (320, représenté en ligne continue), le deuxième ensemble comprenant *3.M* données elles-mêmes superposées par décalage temporel de *T/2* sur *2.T,* c'est-à-dire sur une longueur *2.M.* Cette superposition forme ainsi un bloc, dit « paquet » de longueur *2.M* de symboles OFDM/OQAM délivré par la modulation selon l'invention d'un bloc de *4.M* données réelles, et comprenant ainsi *4.M* porteuses modulées superposées sur une longueur *2.M.* Selon cette représentation, un « paquet » de longueur *2.M* comprend donc deux « blocs élémentaires » de longueur *M.*

Ainsi, selon l'invention, la nouvelle architecture pour la modulation par blocs permet de reconstituer un demi-symbole à chaque extrémité de la trame. Les deux demi-symboles aux extrémités étant tronqués, on obtient une discontinuité entre deux demi-symboles consécutifs appartenant à des blocs (blocs élémentaires ou paquets selon la valeur de *nb*), adjacents comme le montre la figure 3B (discontinuité entre 330 et 340).

En effet, les données, que les demi-symboles transmettent sur chaque porteuse, ne sont pas les mêmes (« montant » et « descendant »), ce qui crée cette discontinuité. Plus la durée de la trame est courte plus la discontinuité sera élevée.

*5.2.2 Système de démodulation,*

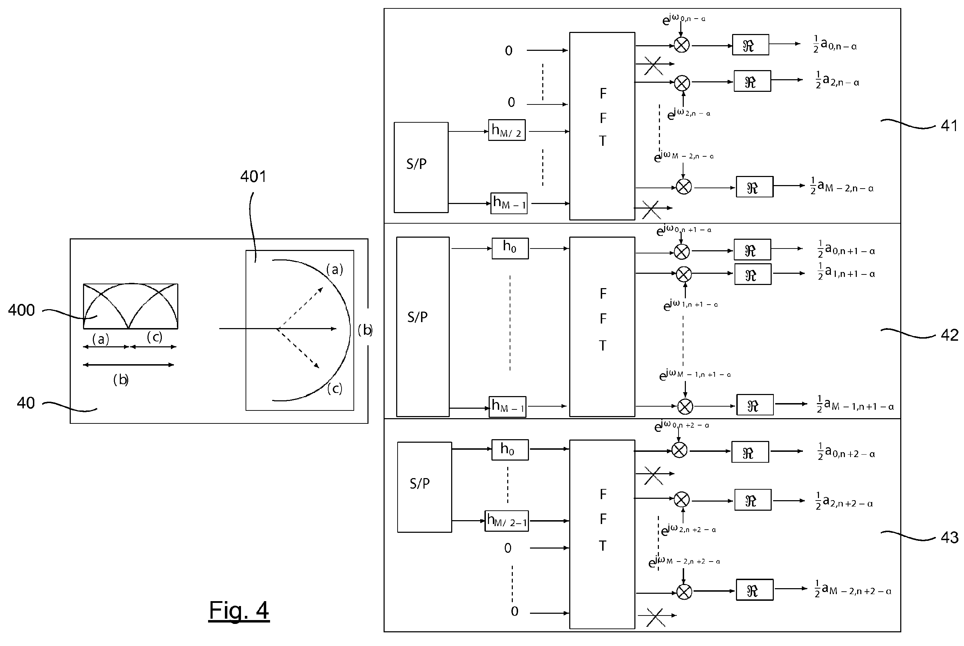

Le schéma du démodulateur, réalisant les opérations duales du « modulateur blocs » OFDM/OQAM de la figure 2, est représenté sur la figure 4.

Ainsi, de manière réciproque au procédé de modulation, le démodulateur bloc met en oeuvre le procédé de démodulation selon l'invention en implémentant principalement, pour un bloc de symboles OFDM/OQAM (400) de longueur $nb.M/2$ reçu, les étapes suivantes :

- extraction (40) de premier, deuxième et troisième ensembles de porteuses modulées du bloc de symboles OFDM/OQAM, après application de décalages temporels, de façon à obtenir un premier ensemble de $M/2$ premières porteuses modulées, un deuxième ensemble de $nb.M/2$ porteuses modulées, et un troisième ensemble de $M/2$ dernières porteuses modulées ;
- première démodulation (41) par un premier démodulateur du premier ensemble de $M/2$ premières porteuses modulées délivrant $M/2$ premières données d'un bloc de données réelles correspondant au bloc de symboles OFDM/OQAM (400) reçu ;
- deuxième démodulation (42) par un deuxième démodulateur du deuxième ensemble de $nb.M/2$ porteuses modulées délivrant $(nb-1).M$ données suivantes du bloc de données ;
- troisième démodulation (43) par un troisième démodulateur du troisième ensemble de $M/2$ dernières porteuses modulées délivrant $M/2$ dernières données du bloc de données.

En effet, en entrée du démodulateur bloc selon l'invention, on reçoit par exemple un bloc, dit « bloc élémentaire » de longueur $M$ de symboles OFDM/OQAM délivré par la modulation d'un bloc de $2.M$ données réelles tel que décrit précédemment.

Sur la base d'une parfaite synchronisation, l'étape d'extraction consiste à alimenter la première démodulation avec les $M/2$ premières porteuses modulées (les porteuses d'indice k, tel que

$$0 \le k \le \frac{M}{2} - 1)$$

du bloc de symboles OFDM/OQAM reçu, la deuxième démodulation avec la totalité des M porteuses modulées (les porteuses d'indice k, tel que $0 \le k \le M$ -1) du «bloc élémentaire » de longueur M de symboles OFDM/OQAM, et la troisième démodulation avec les M/2 dernières porteuses modulées (les porteuses d'indice k, tel que « bloc élémentaire ».

$$\frac{M}{2} \le k \le M - 1)$$

de ce même

A partir d'un « bloc élémentaire » de longueur M OFDM/OQAM reçu, le procédé de démodulation selon l'invention délivre 2.M données réelles correspondant à 2.M porteuses modulées superposées sur la longueur M du « bloc élémentaire » reçu.

En effet, tirant profit de l'orthogonalité des porteuses modulées et superposées par le modulateur bloc, le démodulateur bloc selon l'invention « voit » en entrée M porteuses modulées qu'il démodule et de « dé-superpose » afin de délivrer les 2.M données réelles correspondantes.

De manière similaire, dans le cas où le bloc de symboles OFDM/OQAM reçu correspond à un « paquet » $(nb>2)$ de longueur $nb.M/2$, les première et deuxième démodulations sont alimentées de la même manière que pour le cas du « bloc élémentaire » tandis que la deuxième démodulation est alimentée par $nb.M/2$ porteuses modulées.

Ainsi, dans le cas représenté en relation avec la figure 3B où $nb=4$, le démodulateur bloc reçoit un paquet de symboles OFDM de longueur $2.M$, les $2.M$ porteuses modulées « vues » par le démodulateur blocs alimentent donc la deuxième modulation qui délivre en sortie $3.M$ données réelles.

En outre, selon le mode de réalisation représenté en relation avec la figure 4, le procédé de démodulation selon l'invention comprend une étape de commutation (401) alimentant, pour chaque bloc de symboles OFDM/OQAM de longueur $nb.M/2$ reçu :

- l'entrée du premier démodulateur avec le premier ensemble de *M/2* premières porteuses modulées;
- l'entrée du deuxième démodulateur avec le deuxième ensemble de *nb.M/2* porteuses modulées;
- l'entrée du troisième démodulateur avec le troisième ensemble de *M/2* dernières porteuses modulées.

Cette commutation instaure une cadence, en alimentant le premier démodulateur sur une durée *T/2*, le deuxième démodulateur sur une durée *T*, et le troisième démodulateur sur une durée *T/2*.

Par ailleurs, de manière duale à la modulation, la première démodulation (41) comprend les sous-étapes successives suivantes :

- conversion série/parallèle des *M/2* premières porteuses modulées, délivrant *M/2* premières porteuses modulées parallèles en sortie d'un premier convertisseur série/parallèle ;
- filtrage appliqué aux *M/2* premières porteuses modulées parallèle, délivrant *M* premières porteuses modulées filtrées, dont les M/2 premières porteuses modulées filtrées sont nulles ;
- mise en oeuvre d'une transformée de Fourier rapide directe alimentée par les *M* premières porteuses modulées filtrées, délivrant *M* premières données démodulées dont une donnée sur deux est nulle.

Par ailleurs, selon ce mode de réalisation et de manière classique, les données démodulées sont multipliées par le terme

$$e^{j\omega_{m,n-\alpha}} = e^{-j\frac{\pi}{2}(n-\alpha)} e^{j\frac{\pi}{2}m\frac{(N-1)}{N}}$$

avec la longueur du filtre prototype *L= M= 2N,* ce qui implique compte tenu de la relation *L* = $\alpha N$ - $\beta$+ 1 que $\alpha$ = 2 et $\beta$ = 1, $\alpha$ et $\beta$ correspondant à des termes de retard. Puis on isole la partie réelle de chaque donnée démodulée obtenue. Selon ce mode de réalisation basé sur un schéma causal, l'entrée du démodulateur doit être retardée d'une période d'échantillonnage (un tel retard n'étant pas présenté sur la figure 4).

Il est à noter que selon d'autres modes de réalisation, non représentés, des schémas non causaux utilisant des multiplications par des exponentielles différentes pourraient également être utilisés.

En outre, comme indiqué précédemment au regard du document « Application de la théorie des bancs de filtres à l'analyse et à la conception de modulations multiporteuses orthogonales et biorthogonales », C. Siclet, Université de Rennes 1 (France), thèse de Doctorat, soutenue le 18 Novembre 2002, on peut utiliser à la place de la transformée de Fourier rapide directe (FFT) représentée sur la figure 4 une transformée de Fourier rapide inverse (IFFT).

Par ailleurs, la deuxième démodulation (42) comprend les sous-étapes successives suivantes :

- conversion série/parallèle des *nb.M/2* porteuses modulées, délivrant *(nb-1)* ensembles de *M* deuxièmes porteuses modulées parallèles en sortie d'un deuxième convertisseur série/parallèle ;
- filtrage de longueur *M* appliqué aux *(nb-1).M* deuxièmes porteuses modulées, délivrant *(nb-1)* ensembles de M deuxièmes porteuses modulées filtrées;
- mise en oeuvre de *(nb-1)* transformées de Fourier rapides directes successives alimentées par les *(nb-1)* ensembles de *M* deuxièmes porteuses modulées filtrées, délivrant *(nb-1).M* deuxièmes données réelles démodulées, c'est-à-dire sur *(nb-1)* durées *T,* dans le cas où *nb=2,* ici représenté, une seule transformée de Fourier rapide directe est donc mise en oeuvre, et dans le cas non représenté où *nb=4,* trois transformées de Fourier rapides directes seraient mises en oeuvre.

En particulier, pour *nb>2,* le deuxième modulateur met en oeuvre *(nb-1)* conversions série/parallèle de *M* deuxièmes porteuses modulées, c'est-à-dire que les deuxièmes porteuses modulées d'indice $0 \le k \le M$ - 1 sont converties série/parallèle, ensuite l'ensemble des deuxièmes porteuses modulées d'indice $\frac{M}{2} \le k \le \frac{3M}{2} - 1$ est converti série/parallèle, et ainsi de suite jusqu'à l'ensemble des deuxièmes porteuses modulées d'indice

$$\frac{(nb-1)M}{2} \le k \le \frac{nb.M}{2} - 1.$$

Ainsi, les *(nb-1)* conversions série/parallèle sont respectivement alimentées par *(nb-1)* ensembles de *M* deuxièmes porteuses modulées décalés l'un par rapport à l'autre de *M/2* deuxièmes porteuses modulées.

De même que mentionné ci-dessus, les données démodulées sont multipliées par des termes en exponentielle tels que ceux mentionnés par exemple ci-dessus.

En outre, comme indiqué précédemment il est également possible d'utiliser à la place de la transformée de Fourier rapide directe (FFT) représentée sur la figure 4 une transformée de Fourier rapide inverse (IFFT).

En outre la troisième démodulation (43) comprend les sous-étapes successives suivantes :

- conversion série/parallèle de $M/2$ dernières porteuses modulées, délivrant $M/2$ dernières porteuses modulées parallèles en sortie d'un troisième convertisseur série/parallèle ;
- filtrage appliqué aux $M/2$ dernières porteuses modulées parallèles, délivrant $M$ dernières porteuses modulées filtrées, dont les M/2 dernières porteuses modulées filtrées sont nulles;
- mise en oeuvre d'une transformée de Fourier rapide directe alimentée par les $M$ dernières porteuses modulées filtrées, délivrant $M$ dernières données démodulées dont une donnée sur deux est nulle.

De même que mentionné ci-dessus, les données démodulées sont multipliées par des termes en exponentielle tels que ceux mentionnés par exemple ci-dessus.

En outre, comme indiqué précédemment il est également possible d'utiliser à la place de la transformée de Fourier rapide directe (FFT) représentée sur la figure 4 une transformée de Fourier rapide inverse (IFFT).

Selon ce mode de réalisation particulier, les sorties des trois convertisseurs série/parallèle vont alimenter respectivement les trois entrées des modules de transformée de Fourier rapide directe ou inverse.

Selon le mode de réalisation représenté en relation avec la figure 4, les premier et troisième modules de transformée de Fourier fonctionnent en alimentant respectivement les trois entrées des modules de transformée de Fourier rapide directe ou inverse sur une durée $T$, $(nb-1).T$, et $T$.

L'implémentation du démodulateur blocs représentée en relation avec la figure 4 indique également que le traitement de démodulation même s'il permet de reconstruire parfaitement les données d'origine y compris celles situées dans les sous-blocs de bords (a) et (c) issus du « découpage » effectué lors de la modulation, l'amplitude de celles-ci est divisée par deux. Ceci s'explique par la réduction de puissance introduite au modulateur par l'annulation d'une sousporteuse sur 2.

Ainsi, avantageusement selon un aspect particulier de l'invention, au regard des figures 2 et 4 relatives à la modulation et à la démodulation, il est nécessaire de multiplier par deux les porteuses associées aux sous-blocs de données de bords a) et c).

Afin d'éviter une amplification du bruit en réception, ce facteur multiplicatif par deux est selon l'invention réparti équitablement entre modulation et démodulation.

Ainsi, selon un aspect particulier de l'invention non représenté, une multiplication par $\sqrt{2}$ est mise en oeuvre lors de la modulation et de la démodulation sans accroître la complexité de réalisation. En effet, autant lors de la modulation que lors de la démodulation, les pré et post-traitements impliquent des multiplications pour chaque porteuse.

Selon un mode de réalisation particulier, le contenu de ces multiplieurs peut être précalculé dans des tables prenant en compte ce facteur correctif.

*5.2.3 Variantes de réalisation et performances*

Afin d'optimiser la complexité des modulateur et démodulateur blocs précédemment décrits, une variante de réalisation est présentée ci-après.

Comme on l'a vu précédemment, l'invention propose de traiter les $M/2$ données réelles correspondant aux bords d'un train de données réelles à moduler de manière distincte au regard de la partie centrale comprenant *(nb-1).M* données réelles.

Si l'on considère les *a priori* de l'Homme du métier, il peut sembler que mettre en oeuvre un traitement distinct des bords au regard de la partie centrale, augmente la complexité.

Cependant, comme démontré par la suite, le traitement spécifique proposé selon l'invention aboutit au contraire à une réduction de la complexité du système de modulation/démodulation.

Afin d'effectuer cette démonstration, on détermine tout d'abord la complexité d'une transformée de Fourier rapide inverse IFFT dont les entrées contiennent une moitié de zéros notée $IFFT_{mz}$.

Selon cette démonstration, on considère notamment que la longueur du filtre prototype OFDM/OQAM est égale à M, et selon cette hypothèse on obtient les relations de conjugaison entre les termes $u_{k,n}$ des sorties de l'IFFT suivantes pour $0 \leq k \leq M/2 - 1$:

$$\begin{cases} u_{k,n} = (-1)^n \, u^*_{M/2-k-1,n} \\ u_{M/2+k,n} = (-1)^n \, u^*_{M-k-1,n} \end{cases} \tag{1}$$

avec :

- $u_{m,n}$ un symbole transformé associé à la sortie d'indice $m$ de l'étape de transformation fréquence/temps 12 à un instant n ;
- * l'opérateur conjugué.

En outre, si selon l'invention, la moitié des entrées de l'IFFT d'indices impairs sont à zéro (des relations similaires étant obtenues si les indices pairs sont à zéro) pour $0 \le k \le M/2$ -1, *on* obtient les relations suivantes :

$$\begin{aligned} u_{k,n} &= e^{j\frac{\pi}{2}n} \sum_{p=0,m=2p}^{M/2-1} a_{m,n} e^{-j\frac{\pi}{2}m\frac{D-N}{N}} e^{j2\pi\frac{mk}{N}} \\ &= e^{j\frac{\pi}{2}n} \sum_{p=0,m=2p}^{M/2-1} a_{m,n} e^{-j\frac{\pi}{2}2p\frac{2N-1-N}{N}} e^{j2\pi\frac{2pk}{N}} \\ &= e^{j\frac{\pi}{2}n} \sum_{p=0,m=2p}^{M/2-1} a_{m,n} e^{-j\pi p} e^{j\frac{\pi p}{N}} e^{j2\pi\frac{2pk}{N}} \end{aligned} \tag{2}$$

$$\begin{aligned} u_{M/2+k,n} &= e^{j\frac{\pi}{2}n} \sum_{p=0,m=2p}^{M/2-1} a_{m,n} e^{-j\frac{\pi}{2}2p\frac{2N-1-N}{N}} e^{j2\pi\frac{2p(k+M/2)}{N}} \\ &= e^{j\frac{\pi}{2}n} \sum_{p=0,m=2p}^{M/2-1} a_{m,n} e^{-j\pi p} e^{j\frac{\pi p}{N}} e^{j2\pi\frac{2pk}{N}} \\ &= u_{k,n} \end{aligned} \tag{3}$$

D'après les relations (1) et (3) il est démontré que seulement un quart de sorties de l'$IFFT_{mz}$ est nécessaire pour calculer la totalité des sorties sachant que seule la moitié de ces sorties est nécessaire dans le modulateur bloc.

Ainsi, si ce quart de sorties est choisi parmi les indices pairs, il est possible de restituer la moitié de sorties nécessaires à la démodulation, i.e. les sorties d'indices allant de M/2 à M -1 pour l'*IFFTmz* du sous-bloc (a) et de 0 à M/2-1 pour l'*IFFTmz* du sous-bloc (c).

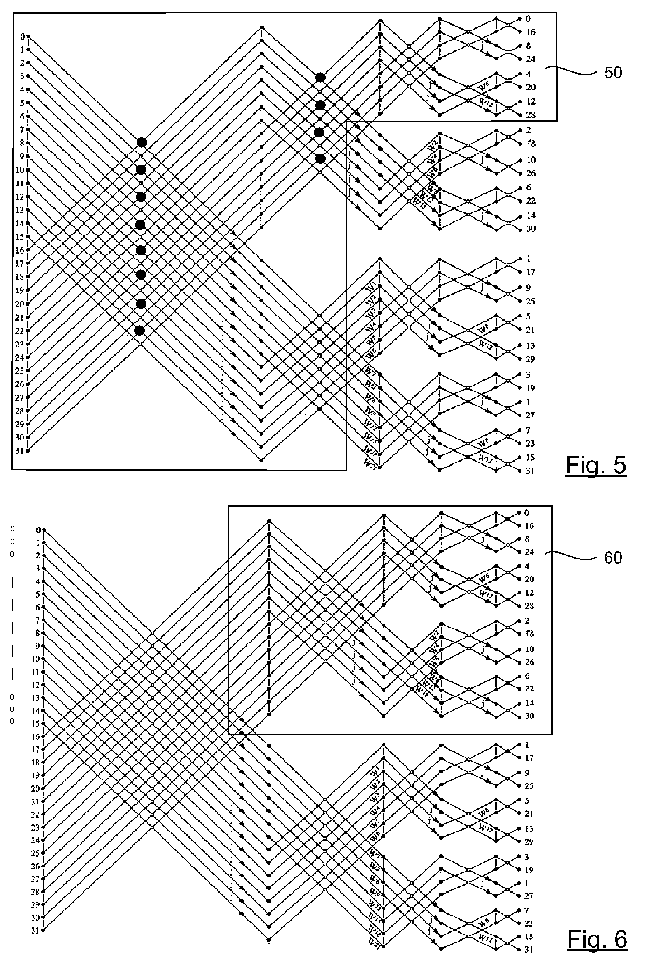

Un algorithme connu pour calculer l'*IFFTmz* avec la complexité opératoire la plus réduite est, comme pour l'IFFT du sous-bloc (b) celui qui est basé sur la décimation en fréquence (DIF) tel que décrit dans le document « FBMC/OQAM modulators with half complexity » Y. Dandach et P. Siohan, Proceedings Globecom'11, Houston, Texas, 2011, dont les auteurs sont également les inventeurs de la présente demande de brevet. En effet, en utilisant l'algorithme « split radix » tel que décrit dans le document « Implementation of « split-radix » FFT algorithms for complex, real and real symmetric data » P. Duhamel et H. Hollman, IEEE International conference on Acoustics, Speech, and Signal Processing ICASSP 85, Vol 10, Avril 1985, pp 784-787, avec décimation en fréquence (DIF), la complexité pour calculer l'*IFFTmz* de taille M est équivalente à celle pour calculer une IFFT de taille *M/4* plus *M/4 + M/8* additions complexes comme représenté par la figure 5 pour *M=32,* où la notation *Wp* est telle que $W^p = e^{j\frac{2\pi p}{M}}$.

Les *M/4 + M/8* additions complexes proviennent du calcul des entrées de l'IFFT de taille *M/4* comme le montre la figure 5 en tenant compte du fait que les entrées d'indices impairs de l'*IFFTmz* sont nulles. Dans ce cas, en utilisant le résultat du document « Implementation of « split-radis » FFT algorithms for complex, real and real symmetric data » P. Duhamel et H. Hollman, IEEE International conference on Acoustics, Speech, and Signal Processing ICASSP 85, Vol 10, Avril 1985, PP 784-787, la complexité de l'*IFFTmz* est équivalente à *M/4log₂ M - 5M/4 +* 4 multiplications réelles ($\mu$R) et *3M/4log₂ M - 3M/2 +* 4 additions réelles ($\alpha$R). ($\alpha$R).

Dès lors, une comparaison des complexités du modulateur bloc OFDM/OQAM selon l'invention et d'un modulateur OFDM/OQAM de l'art antérieur selon le document « FBMC/OQAM modulators with half complexity » Y. Dandach et P. Siohan, Proceedings Globecom'11, Houston, Texas, 2011 peut être établie.

La complexité associée au traitement du sous-bloc (b) a une complexité égale à celle du modulateur de l'art antérieur à savoir *3M/2log$_2$ M -2M +4 ($\alpha$R) et M/2log$_2$ M -2M +4 ($\mu$R)*.

La complexité totale pour les sous-blocs (a) et (c) équivaut à celle de deux *IFFTmz* et elle permet donc un gain de *M - 4 ($\alpha$R) et M/2 - 4 ($\mu$R)*.

Au niveau de la démodulation des deux demi-symboles correspondants aux sous-blocs de données (a) et (c), deux transformées de Fourier rapides directes (FFT) « élaguées », c'est-à-dire dont la moitié (supérieure ou inférieure) des entrées est nulle telle que représentée en relation avec la figure 4, sont mises en oeuvre, et seules les sorties d'indices pairs sont en conséquence à calculer.

Comme mentionné précédemment, il est possible selon l'invention d'utiliser pour la modulation une transformée de Fourier rapide directe ou inverse. Les modifications devant respectivement être mises en oeuvre pour l'application de l'une ou l'autre de ces transformées directe ou inverse lors de la modulation sont notamment décrites dans le document « Application de la théorie des bancs de filtres à l'analyse et à la conception de modulations multiporteuses orthogonales et biorthogonales », C. Siclet, Université de Rennes 1 (France), thèse de Doctorat, soutenue le 18 Novembre 2002., et correspondent essentiellement à des modifications des termes de phase mis en oeuvre.

Il est donc également possible d'appliquer une réduction de complexité au niveau du démodulateur. Comme pour l'*IFFTmz* précédemment traitée, la complexité d'une telle FFT « élaguée » est équivalente à celle d'une transformée de Fourier rapide directe (FFT) de taille *M/2*, en utilisant l'algorithme « split radix » avec décimation en fréquence (DIF).

Cette transformée de Fourier rapide directe (FFT) est représentée par la figure 6.

Par suite la complexité pour démoduler un demi-symbole est équivalente à *3M/2log$_2$ M -3M +4 ($\alpha$R)* et *M/2log$_2$ M -2M +4 ($\mu$R)*.

Pour un démodulateur FBMC/OQAM conventionnel, la complexité de la transformée de Fourier rapide inverse (IFFT) pour démoduler chaque symbole est équivalente à *3Mlog$_2$M - 3M +4 ($\alpha$R)* et *Mlog$_2$M -3M +4 ($\mu$R)*.

Par conséquent, la démodulation des deux demi-symboles du modulateur selon l'invention est moins coûteuse que la démodulation d'un symbole issu d'un modulateur conventionnel et permet une réduction de complexité de *3M - 4 ($\alpha$R)* et de *M - 4 ($\mu$R)*.

Enfin, au regard de la figure 6 (et notamment la partie inférieure), si les indices impairs sont utilisés, la complexité pour démoduler les deux demi-symboles de bords est moins réduite au regard du cas où les indice pairs (60) sont utilisés. En effet, la démodulation d'indices impairs implique des opérations de multiplications complexes plus coûteuses.

C'est pourquoi les inventeurs ont proposé une amélioration en terme de complexité du modulateur OFDM/OQAM par blocs selon l'invention, en forçant à zéro les données parallèles d'indice impair alimentant les première et troisième modulations mettant en oeuvre des transformées de Fourier rapide directe ou inverse (FFT ou IFFT) alimentées par M données parallèles, dont les données parallèles d'indice impair sont forcées à zéro.

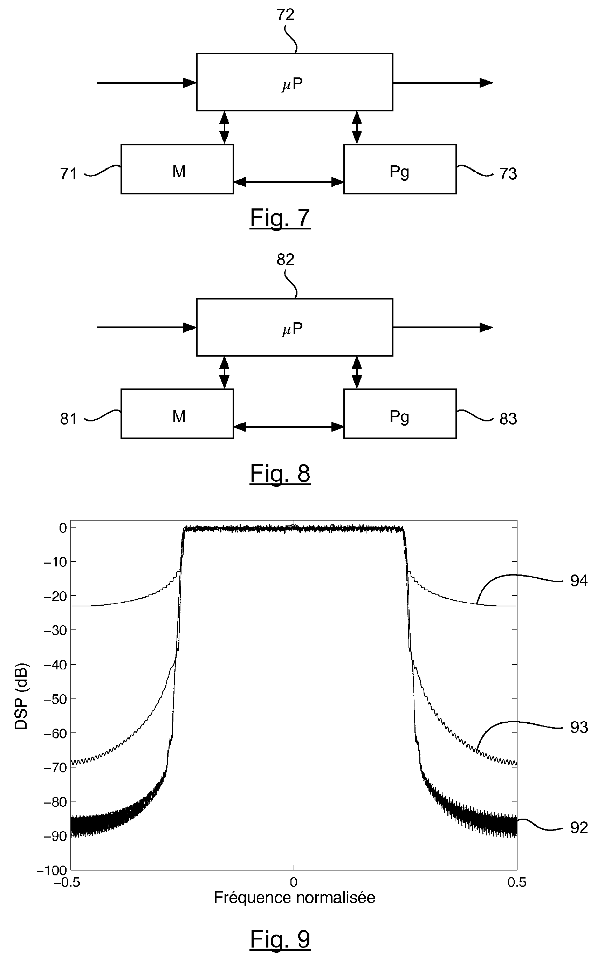

Les performances du système de modulation/démodulation (« modem ») selon l'invention au regard de l'art antérieur sont représentées en relation avec la figure 9.

En effet, cette figure 9 représente l'effet de la discontinuité créée par la troncature des données réelles aux bords d'un paquet sur la densité spectrale de puissance (DSP). Le filtre prototype utilisé est le filtre temporel (« *time filtering* » TFL) avec un nombre de porteuses *M = 128* et *L= M.*

Sur la figure 9, la courbe (93) représentative de la discontinuité associée au traitement de modulation selon l'invention pour le cas où deux données réelles sont tronqués dans un bloc de trois données réelles (OFDM/OQAM-2/3), montre que la densité spectrale de puissance du signal est légèrement détériorée, mais qu'elle reste toutefois meilleure que celle (94) associée au traitement OFDM classique.

En outre, l'effet de discontinuité diminue quand la durée du paquet augmente notamment pour deux données réelles tronquées sur quinze données réelles modulées par paquet (OFDM/OQAM-2/15, courbe (92)).

*5.3 Structure du modulateur et du démodulateur*

On présente finalement, respectivement en relation avec les figures 7 et 8, la structure simplifiée d'un modulateur par blocs (figure 7) et d'un démodulateur par blocs (figure 8) OFDM/OQAM ou BFDM/OQAM mettant en oeuvre une technique de modulation/démodulation selon un exemple décrit ci-dessus.

Un tel modulateur par blocs comprend une mémoire 71 comprenant une mémoire tampon, une unité de traitement 72, équipée par exemple d'un microprocesseur $\mu$P, et pilotée par le programme d'ordinateur 73, mettant en oeuvre le procédé de modulation selon l'invention.

A l'initialisation, les instructions de code du programme d'ordinateur 73 sont par exemple chargées dans une mémoire RAM avant d'être exécutées par le processeur de l'unité de traitement 72. L'unité de traitement 72 reçoit en entrée un train de données réelles. Le microprocesseur de l'unité de traitement 72 met en oeuvre les étapes du procédé de modulation décrit précédemment, selon les instructions du programme d'ordinateur 73, pour effectuer une modulation par blocs du train de données réelles reçues regroupées en blocs de données de *nb.M* données réelles, où *M* est le nombre de porteuses d'un des blocs de symboles OFDM/OQAM et *nb* un entier supérieur ou égal à 2.

Pour cela, le modulateur comprend, outre la mémoire tampon 71, des premiers moyens de modulation par un premier modulateur des *M/2* premières données du bloc de données réelles, délivrant un premier ensemble de porteuses modulées, des deuxièmes moyens de modulation par un deuxième modulateur des *(nb-1).M* données suivantes du bloc de données réelles, délivrant un deuxième ensemble de *(nb-1).M* porteuses modulées, des troisièmes moyens de modulation par un troisième modulateur des *M/2* dernières données du bloc de données réelles, délivrant un troisième ensemble de porteuses modulées, des moyens de superposition de premier, deuxième et troisième ensembles de porteuses modulées, après application de décalages temporels, de façon à former un bloc de symboles OFDM/OQAM de longueur *nb.M/2,* le premier ensemble étant superposé temporellement avec le début du deuxième ensemble et le troisième ensemble étant superposé temporellement avec la fin du deuxième ensemble.

Ces moyens sont pilotés par le microprocesseur de l'unité de traitement 72.

La figure 8 représente réciproquement le démodulateur par blocs selon l'invention.

Un tel démodulateur par blocs comprend une mémoire 81 comprenant une mémoire tampon, une unité de traitement 82, équipée par exemple d'un microprocesseur *μP,* et pilotée par le programme d'ordinateur 83, mettant en oeuvre le procédé de démodulation selon l'invention.

A l'initialisation, les instructions de code du programme d'ordinateur 83 sont par exemple chargées dans une mémoire RAM avant d'être exécutées par le processeur de l'unité de traitement 82. L'unité de traitement 82 reçoit en entrée des blocs de symboles OFDM/OQAM de longueur *nb.M/2* obtenus par le procédé de modulation précédemment décrit . Le microprocesseur de l'unité de traitement 82 met en oeuvre les étapes du procédé de démodulation décrit précédemment, selon les instructions du programme d'ordinateur 83, pour effectuer une démodulation par blocs des blocs de symboles OFDM/OQAM de longueur *nb.M/2* reçus, où *M* est le nombre de porteuses d'un des blocs de symboles OFDM/OQAM et *nb* un entier supérieur ou égal à 2.

Pour cela, le démodulateur comprend, outre la mémoire tampon 81 des moyens d'extraction de premier, deuxième et troisième ensembles de porteuses modulées du bloc de symboles OFDM/OQAM, après application de décalages temporels, de façon à obtenir un premier ensemble de *M/2* premières porteuses modulées, un deuxième ensemble de *nb.M/2* porteuses modulées, et un troisième ensemble de *M/2* dernières porteuses modulées, des premiers moyens de démodulation par un premier démodulateur du premier ensemble de *M/2* premières porteuses modulées délivrant *M/2* premières données d'un bloc de données réelles correspondant au bloc de symboles OFDM/OQAM reçu, des deuxièmes moyens de démodulation par un deuxième démodulateur du deuxième ensemble de *nb.M/2* porteuses modulées délivrant *(nb-1).M* données suivantes du bloc de données réelles, des troisièmes moyens de démodulation par un troisième démodulateur du troisième ensemble de *M/2* dernières porteuses modulées délivrant *M/2* dernières données du bloc de données réelles.

## Revendications

1. Procédé de modulation d'un train de données réelles, mettant en oeuvre un filtre prototype de longueur inférieure ou égale à *M* et délivrant des blocs de symboles OFDM/OQAM,
   **caractérisé en ce que** lesdites données réelles sont regroupées en blocs (20) de *nb.M* données réelles, où *M* est le nombre de porteuses d'un desdits blocs de symboles OFDM/OQAM et *nb* un entier supérieur ou égal à 2,
   et **en ce qu'**il comprend, pour un bloc de données réelles, les étapes suivantes :

   - première modulation (21) par un premier modulateur des *M/2* premières données dudit bloc de données réelles, délivrant un premier ensemble de porteuses modulées ;
   - deuxième modulation (22) par un deuxième modulateur des *(nb-1).M* données suivantes dudit bloc de données réelles, délivrant un deuxième ensemble de *(nb-1).M* porteuses modulées ;
   - troisième modulation (23) par un troisième modulateur des *M/2* dernières données dudit bloc de données réelles, délivrant un troisième ensemble de porteuses modulées ;
   - superposition (24) desdits premier, deuxième et troisième ensembles de porteuses modulées, après application de décalages temporels, de façon à former un bloc de symboles OFDM/OQAM de longueur *nb.M/2,* ledit premier ensemble étant superposé temporellement avec le début du deuxième ensemble et ledit troisième ensemble étant superposé temporellement avec la fin du deuxième ensemble.

2. Procédé de modulation selon la revendication 1, **caractérisé en ce qu'**il comprend une étape de commutation (25) alimentant, pour chaque bloc de données réelles:

   - l'entrée dudit premier modulateur avec les *M/2* premières données dudit bloc de données réelles;

- l'entrée dudit deuxième modulateur avec les *(nb-1).M* données suivantes dudit bloc de données réelles;
- l'entrée dudit troisième modulateur avec *M/2* dernières données dudit bloc de données réelles.

3. Procédé de modulation selon la revendication 1, **caractérisé en ce que** lesdites première et troisième modulations mettent en oeuvre des transformées de Fourier rapides directe ou inverses rapides (FFT ou IFFT) alimentées par M données parallèles, dont une sur deux est forcée à zéro.

4. Procédé de modulation selon la revendication 1, **caractérisé en ce que** ledit procédé met en oeuvre un filtre prototype de longueur inférieure ou égale à *M* réalisant deux types de filtrage distincts, l'un appliqué au deuxième ensemble de *(nb-1).M* porteuses modulées, et l'autre appliqué audit premier ensemble de porteuses modulées et audit troisième ensemble de porteuses modulées délivrant un premier et un troisième ensemble comprenant chacun *M/2* porteuses modulées filtrées.

5. Procédé de modulation selon la revendication 3, **caractérisé en ce que** lesdites première et troisième modulation mettent respectivement en oeuvre une expansion desdites *M/2* premières données dudit bloc et desdites *M/2* dernières données dudit bloc de données réelles, ladite expansion consistant à insérer un zéro entre chacune desdites *M/2* premières données dudit bloc de données réelles et chacune desdites *M/2* dernières données dudit bloc de données réelles délivrant respectivement en entrée desdites transformées de Fourier rapides directe ou inverse desdites premières et troisième modulation *M* premières données expansées dudit bloc de données réelles et M dernières données expansées dudit bloc de données réelles, dont une sur deux est forcée à zéro.

6. Procédé de modulation selon la revendication 1,
   **caractérisé en ce que** ladite première modulation comprend les sous-étapes successives suivantes :

   - expansion desdites *M/2* premières données dudit bloc de données réelles, ladite expansion consistant à insérer un zéro entre chacune desdites *M/2* premières données dudit bloc de données réelles, délivrant *M* premières données expansées dudit bloc ;
   - conversion série/parallèle desdites *M* premières données expansées dudit bloc de données réelles, délivrant *M* données parallèles en sortie d'un premier convertisseur série/parallèle,
   - mise en oeuvre d'une transformée de Fourier rapide directe ou inverse (FFT ou IFFT) alimentée par lesdites *M* données parallèles en sortie dudit premier convertisseur série/parallèle, dont une sur deux est forcée à zéro par ladite opération d'expansion desdites *M/2* premières données, délivrant *M* premières porteuses modulées,
   - filtrage appliqué audites *M* premières porteuses modulées, délivrant *M/2* premières porteuses modulées filtrées,
   - conversion parallèle/série desdites *M/2* premières porteuses modulées filtrées délivrant ledit premier ensemble de porteuses modulées,

   **en ce que** ladite deuxième modulation comprend les sous-étapes successives suivantes :

   - conversion série/parallèle desdites *(nb-1).M* données suivantes dudit bloc de données réelles, délivrant *(nb-1).M* données parallèles en sortie d'un deuxième convertisseur série/parallèle,
   - mise en oeuvre de *(nb-1)* transformées de Fourier rapides directes ou inverses (FFT ou IFFT) successives alimentées par lesdites *(nb-1).M* données parallèles données parallèles en sortie dudit deuxième convertisseur série/parallèle, délivrant *(nb-1).M* deuxièmes porteuses modulées,
   - filtrage de longueur *M* appliqué audites *(nb-1).M* deuxièmes porteuses modulées, délivrant *(nb-1)* ensembles de *M* deuxièmes porteuses modulées filtrées,
   - conversion parallèle/série desdits *(nb-1)* ensembles de *M* deuxièmes porteuses modulées filtrées délivrant ledit deuxième ensemble de *(nb-1).M* porteuses modulées,

   et **en ce que** ladite troisième modulation comprend les sous-étapes successives suivantes :

   - expansion desdites *M/2* dernières données dudit bloc, ladite expansion consistant à insérer un zéro entre chacune desdites *M/2* dernières données dudit bloc de données réelles, délivrant *M* troisièmes données expansées dudit bloc ;
   - conversion série/parallèle desdites *M* troisièmes données expansées dudit bloc de données réelles, délivrant *M* données parallèles en sortie d'un troisième convertisseur série/parallèle,
   - mise en oeuvre d'une transformée de Fourier rapide directe ou inverse (FFT ou IFFT) alimentées par lesdites *M* données parallèles en sortie dudit troisième convertisseur série/parallèle, dont une sur deux est forcée à zéro par ladite opération d'expansion desdites $M/2$ dernières données, délivrant $M$ troisièmes porteuses modulées,
- filtrage appliqué audites $M$ troisièmes porteuses modulées, délivrant $M/2$ troisièmes porteuses modulées filtrées,
- conversion parallèle/série desdites $M/2$ troisièmes porteuses modulées filtrées délivrant ledit troisième ensemble de porteuses modulées.

7. Procédé de modulation selon la revendication 1, **caractérisé en ce que** ledit procédé comprend en outre une étape de multiplication par un facteur égal à $\sqrt{2}$ de l'amplitude desdites $M/2$ premières données dudit bloc de données réelles et desdites M/2 dernières données dudit bloc de données réelles.

8. Procédé de modulation selon la revendication 3, **caractérisé en ce que** lesdites première et troisième modulations mettent en oeuvre des transformées de Fourier rapide directe ou inverse (FFT ou IFFT) alimentées par $M$ données parallèles, dont les données parallèles d'indice impair sont forcées à zéro.

9. Procédé de démodulation d'un signal multiporteuse de type OFDM/OQAM comprenant des blocs de symboles OFDM/OQAM de longueur $nb.M/2$ obtenus par le procédé de modulation selon la revendication 1, mettant en oeuvre un filtre prototype de longueur inférieure ou égale à $M$ et délivrant un train de données réelles,
**caractérisé en ce que** lesdites données réelles délivrées sont regroupées en blocs de $nb.M$ données réelles, où $M$ est le nombre de porteuses d'un desdits symboles OFDM/OQAM et $nb$ un entier supérieur ou égal à 2,
et **en ce qu'**il comprend, pour un bloc de symboles OFDM/OQAM de longueur $nb.M/2$ (400) reçu, les étapes suivantes :

- extraction (40) de premier, deuxième et troisième ensembles de porteuses modulées dudit bloc de symboles OFDM/OQAM, après application de décalages temporels, de façon à obtenir un premier ensemble de $M/2$ premières porteuses modulées, un deuxième ensemble de $nb.M/2$ porteuses modulées, et un troisième ensemble de $M/2$ dernières porteuses modulées ;
- première démodulation (41) par un premier démodulateur dudit premier ensemble de $M/2$ premières porteuses modulées délivrant $M/2$ premières données d'un bloc de données réelles correspondant audit bloc de symboles OFDM/OQAM reçu ;
- deuxième démodulation (42) par un deuxième démodulateur dudit deuxième ensemble de $nb.M/2$ porteuses modulées délivrant $(nb-1).M$ données suivantes dudit bloc de données réelles;
- troisième démodulation (43) par un troisième démodulateur dudit troisième ensemble de $M/2$ dernières porteuses modulées délivrant $M/2$ dernières données dudit bloc de données réelles.

10. Dispositif de modulation d'un train de données réelles, mettant en oeuvre un filtre prototype de longueur inférieure ou égale à $M$ et délivrant des blocs de symboles OFDM/OQAM,
**caractérisé en ce que** lesdites données réelles sont regroupées en blocs de $nb.M$ données réelles, où $M$ est le nombre de porteuses d'un desdits blocs de symboles OFDM/OQAM et $nb$ un entier supérieur ou égal à 2,
et **en ce qu'**il comprend les moyens suivants mis en oeuvre pour un bloc de données réelles:

- des premiers moyens de modulation par un premier modulateur des $M/2$ premières données dudit bloc de données réelles, délivrant un premier ensemble de porteuses modulées ;
- des deuxièmes moyens de modulation par un deuxième modulateur des $(nb-1).M$ données suivantes dudit bloc de données réelles, délivrant un deuxième ensemble de $(nb-1).M$ porteuses modulées ;
- des troisièmes moyens de modulation par un troisième modulateur des $M/2$ dernières données dudit bloc de données réelles, délivrant un troisième ensemble de porteuses modulées ;
- des moyens de superposition desdits premier, deuxième et troisième ensembles de porteuses modulées, après application de décalages temporels, de façon à former un bloc de symboles OFDM/OQAM de longueur $nb.M/2$, ledit premier ensemble étant superposé temporellement avec le début du deuxième ensemble et ledit troisième ensemble étant superposé temporellement avec la fin du deuxième ensemble.

11. Dispositif de démodulation d'un signal multiporteuse de type OFDM/OQAM comprenant des blocs de symboles OFDM/OQAM de longueur $nb.M/2$ obtenus par le procédé de modulation selon la revendication 1, mettant en oeuvre un filtre prototype de longueur inférieure ou égale à $M$ et délivrant un train de données réelles,
**caractérisé en ce que** lesdites données réelles délivrées sont regroupées en blocs de $nb.M$ données réelles, où M est le nombre de porteuses d'un desdits symboles OFDM/OQAM et $nb$ un entier supérieur ou égal à 2,
et **en ce qu'**il comprend, pour un bloc de symboles OFDM/OQAM(400) de longueur $nb.M/2$ reçu :

- des moyens d'extraction de premier, deuxième et troisième ensembles de porteuses modulées dudit bloc de symboles OFDM/OQAM, après application de décalages temporels, de façon à obtenir un premier ensemble de *M/2* premières porteuses modulées, un deuxième ensemble de *nb.M/2* porteuses modulées, et un troisième ensemble de *M/2* dernières porteuses modulées ;

- des premiers moyens de démodulation par un premier démodulateur dudit premier ensemble de *M/2* premières porteuses modulées délivrant *M/2* premières données d'un bloc de données réelles correspondant audit bloc de symboles OFDM/OQAM reçu ;

- des deuxièmes moyens de démodulation par un deuxième démodulateur dudit deuxième ensemble de *nb.M/2* porteuses modulées délivrant *(nb-1).M* données suivantes dudit bloc de données réelles;

- des troisièmes moyens de démodulation par un troisième démodulateur dudit troisième ensemble de *M/2* dernières porteuses modulées délivrant *M/2* dernières données dudit bloc de données réelles.

12. Programme d'ordinateur comportant des instructions pour la mise en oeuvre d'un procédé selon l'une des revendications 1 ou 9 lorsque ledit programme est exécuté par un processeur.

## Patentansprüche

1. Verfahren zur Modulation eines realen Datenstroms, das einen Prototyp-Filter mit einer Länge kleiner oder gleich M einsetzt und Blöcke von Symbolen OFDM/OQAM liefert,
**dadurch gekennzeichnet, dass** die realen Daten in Blöcken (20) zu nb.M realen Daten zusammengefasst sind, wobei M die Anzahl von Trägern eines der Blöcke von Symbolen OFDM/OQAM und nb eine ganze Zahl größer oder gleich 2 ist,
und dass es für einen realen Datenblock die folgenden Schritte umfasst:

- erste Modulation (21) durch einen ersten Modulator der M/2 ersten Daten des realen Datenblocks, die eine erste Gesamtheit von modulierten Trägern liefert;
- zweite Modulation (22) durch einen zweiten Modulator der (nb-1).M folgenden Daten des realen Datenblocks, die eine zweite Gesamtheit von (nb-1).M modulierten Trägern liefert;
- dritte Modulation (23) durch einen dritten Modulator der M/2 letzten Daten des realen Datenblocks, die eine dritte Gesamtheit von modulierten Trägern liefert;
- Überlagern (24) der ersten, zweiten und dritten Gesamtheit von modulierten Trägern nach Anwenden von zeitlichen Abstufungen, um einen Block von Symbolen OFDM/OQAM mit einer Länge nb.M/2 zu bilden, wobei die erste Gesamtheit zeitlich mit dem Beginn der zweiten Gesamtheit überlagert ist, und die dritte Gesamtheit zeitlich mit dem Ende der zweiten Gesamtheit überlagert ist.

2. Modulationsverfahren nach Anspruch 1, **dadurch gekennzeichnet, dass** es einen Umschaltschritt (25) umfasst, der für jeden realen Datenblock versorgt:

- den Eingang des ersten Modulators mit den M/2 ersten Daten des realen Datenblocks,
- den Eingang des zweiten Modulators mit den (nb-1).M folgenden Daten des realen Datenblocks,
- den Eingang des dritten Modulators mit M/2 letzten Daten des realen Datenblocks.

3. Modulationsverfahren nach Anspruch 1, **dadurch gekennzeichnet, dass** die erste und die dritte Modulation direkte schnelle oder schnelle inverse Fourier-Transformierte (FFT oder IFFT) einsetzen, die von M parallelen Daten versorgt werden, von denen jedes zweite auf Null gesetzt ist.

4. Modulationsverfahren nach Anspruch 1, **dadurch gekennzeichnet, dass** das Verfahren einen Prototypfilter mit einer Länge kleiner oder gleich M einsetzt, der zwei unterschiedliche Filterungstypen ausführt, einen, der an die zweite Gesamtheit von (nb-1).M modulierten Trägern angelegt wird, und der andere, der an die erste Gesamtheit von modulierten Trägern und an die dritte Gesamtheit von modulierten Trägern angelegt wird, wobei eine erste und eine dritte Gesamtheit geliefert werden, die jeweils M/2 gefilterte modulierte Träger umfassen.

5. Modulationsverfahren nach Anspruch 3, **dadurch gekennzeichnet, dass** die erste und die dritte Modulation eine Expansion der M/2 ersten Daten des Blocks bzw. der M/2 letzten Daten des realen Datenblocks einsetzen, wobei die Expansion darin besteht, eine Null zwischen jedes der M/2 ersten Daten des realen Datenblocks und jedes der M/2 letzten Daten des realen Datenblocks einzufügen, wobei am Eingang der direkten oder inversen schnellen Fourier-Transformierten der ersten und dritten Modulation M erste expandierte Daten des realen Datenblocks und M letzte expandierte Daten des realen Datenblocks geliefert werden, von denen jedes zweite auf Null gesetzt ist.

6. Modulationsverfahren nach Anspruch 1, **dadurch gekennzeichnet, dass** die erste Modulation nacheinander die folgenden Unterschritte umfasst:

- Expansion der M/2 ersten Daten des realen Datenblocks, wobei die Expansion darin besteht, eine Null zwischen jedes der M/2 ersten Daten des realen Datenblocks zu setzen, wobei M erste expandierte Daten des Blocks geliefert werden;
- Seriell/Parallel-Umwandlung der M ersten expandierten Daten des realen Datenblocks, wobei M parallele Daten am Ausgang eines ersten Seriell/Parallel-Wandlers geliefert werden;
- Einsatz einer direkten oder inversen schnellen Fourier-Transformierten (FFT oder IFFT), die mit den M parallelen Daten am Ausgang des ersten Seriell/Parallel-Wandlers versorgt wird, von denen jedes zweite durch den Expansionsvorgang der M/2 ersten Daten auf Null gesetzt ist, wobei M erste modulierte Träger geliefert werden,
- Filterung, die an den M ersten modulierten Trägern angewandt wird, wobei M/2 erste gefilterte modulierte Träger geliefert werden,
- Parallel/Seriell-Umwandlung der M/2 ersten gefilterten modulierten Träger, wobei die erste Gesamtheit von modulierten Trägern geliefert wird,

dass die zweite Modulation nacheinander die folgenden Unterschritte umfasst:

- Seriell/Parallel-Umwandlung der (nb-1).M folgenden Daten des realen Datenblocks, wobei (nb-1).M parallele Daten am Ausgang eines zweiten Seriell/Parallel-Wandlers geliefert werden,
- Einsatz von (nb-1) aufeinanderfolgenden direkten oder inversen schnellen Fourier-Transformierten (FFT oder IFFT), die mit den (nb-1).M parallelen Daten am Ausgang des zweiten Seriell/Parallel-Wandlers versorgt werden, wobei (nb-1).M zweite modulierte Träger geliefert werden,
- Längenfilterung M, die an den (nb-1).M zweiten modulierten Trägern angewandt wird, wobei (nb-1) Gesamtheiten von M zweiten gefilterten modulierten Trägern geliefert werden,
- Parallel/Seriell-Umwandlung der (nb-1) Gesamtheiten von M zweiten gefilterten modulierten Trägern, wobei die zweite Gesamtheit von (nb-1).M modulierten Trägern geliefert wird,

und dass die dritte Modulation nacheinander die folgenden Unterschritte umfasst:

- Expansion der M/2 letzten Daten des Blocks, wobei die Expansion darin besteht, eine Null zwischen jedes der M/2 letzten Daten des realen Datenblocks zu setzen, wobei M dritte expandierte Daten des Blocks geliefert werden;
- Seriell/Parallel-Umwandlung der M dritten expandierten Daten des realen Datenblocks, wobei M parallele Daten am Ausgang eines dritten Seriell/Parallel-Wandlers geliefert werden,
- Einsatz einer direkten oder inversen schnellen Fourier-Transformierten (FFT oder IFFT), die mit den M parallelen Daten am Ausgang des dritten Seriell/Parallel-Wandlers versorgt wird, von denen jedes zweite durch den Expansionsvorgang der M/2 letzten Daten auf Null gesetzt ist, wobei M dritte modulierte Träger geliefert werden,
- Filterung, die an den M dritten modulierten Trägern angewandt wird, wobei M/2 dritte gefilterte modulierte Träger geliefert werden,
- Parallel/Seriell-Umwandlung der M/2 dritten gefilterten modulierten Träger, wobei die dritte Gesamtheit von modulierten Trägern geliefert wird.

7. Modulationsverfahren nach Anspruch 1, **dadurch gekennzeichnet, dass** das Verfahren ferner einen Schritt der Multiplikation mit einem Faktor gleich √2 der Amplitude der M/2 ersten Daten des realen Datenblocks und der M/2 letzten Daten des realen Datenblocks umfasst.

8. Modulationsverfahren nach Anspruch 3, **dadurch gekennzeichnet, dass** die erste und dritte Modulation direkte oder inverse schnelle Fourier-Transformierte (FFT oder IFFT) einsetzen, die mit M parallelen Daten versorgt werden, deren parallele Daten mit ungeradem Index auf Null gesetzt sind.

9. Verfahren zur Demodulation eines Mehrträgersignals vom Typ OFDM/OQAM, umfassend Blöcke von Symbolen OFDM/OQAM mit einer Länge nb.M/2, die durch das Modulationsverfahren nach Anspruch 1 erhalten werden, das einen Prototypfilter mit einer Länge kleiner oder gleich M einsetzt und einen realen Datenstrom liefert,

**dadurch gekennzeichnet, dass** die gelieferten realen Daten zu Blöcken von nb.M realen Daten zusammengefasst werden, wobei M die Anzahl von Trägern eines der Symbole OFDM/OQAM und nb eine ganze Zahl größer oder gleich 2 ist,

und dass es für einen empfangenen Block von Symbolen OFDM/OQAM mit einer Länge nb.M/2 (400), die folgenden Schritte umfasst:

- Extraktion (40) einer ersten, zweiten und dritten Gesamtheit von modulierten Trägern aus dem Block von Symbolen OFDM/OQAM nach Anwenden von zeitlichen Abstufungen, um eine erste Gesamtheit von M/2 ersten modulierten Trägern, eine zweite Gesamtheit von nb.M/2 modulierten Trägern und eine dritte Gesamtheit von M/2 letzten modulierten Trägern zu erhalten;
- erste Demodulation (41) durch einen ersten Demodulator der ersten Gesamtheit von M/2 ersten modulierten Trägern, die M/2 erste Daten eines realen Datenblocks entsprechend dem empfangenen Block von Symbolen OFDM/OQAM liefert;
- zweite Demodulation (42) durch einen zweiten Demodulator der zweiten Gesamtheit von nb.M/2 modulierten Trägern, die (nb-1).M folgende Daten des realen Datenblocks liefert;
- dritte Demodulation (43) durch einen dritten Demodulator der dritten Gesamtheit von M/2 letzten modulierten Trägern, die M/2 letzte Daten des realen Datenblocks liefert.

10. Vorrichtung zur Modulation eines realen Datenstroms, die einen Prototypfilter mit einer Länge kleiner oder gleich M einsetzt und Blöcke von Symbolen OFDM/OQAM liefert, **dadurch gekennzeichnet, dass** die realen Daten zu Blöcken von nb.M realen Daten zusammengefasst sind, wobei M die Anzahl von Trägern der Blöcke von Symbolen OFDM/OQAM und nb eine ganze Zahl größer oder gleich 2 ist,

und dass sie die folgenden Mittel umfasst, die für einen realen Datenblock eingesetzt werden:

- erste Mittel zur Modulation durch einen ersten Modulator der M/2 ersten Daten des realen Datenblocks, die eine erste Gesamtheit von modulierten Trägern liefern;
- zweite Mittel zur Modulation durch einen zweiten Modulator der (nb-1).M folgenden Daten des realen Datenblocks, die eine zweite Gesamtheit von (nb-1).M modulierten Trägern liefern;
- dritte Mittel zur Modulation durch einen dritten Modulator der M/2 letzten Daten des realen Datenblocks, die eine dritte Gesamtheit von modulierten Trägern liefern,
- Mittel zur Überlagerung der ersten, zweiten und dritten Gesamtheit von modulierten Trägern nach Anwenden von zeitlichen Abstufungen, um einen Block von Symbolen OFDM/OQAM mit einer Länge nb.M/2 zu bilden, wobei die erste Gesamtheit zeitlich mit dem Beginn der zweiten Gesamtheit überlagert ist, und die dritte Gesamtheit zeitlich mit dem Ende der zweiten Gesamtheit überlagert ist.

11. Vorrichtung zur Demodulation eines Mehrträgersignals vom Typ OFDM/OQAM, umfassend Blöcke von Symbolen OFDM/OQAM mit einer Länge nb.M/2, die durch das Modulationsverfahren nach Anspruch 1 erhalten werden, das einen Prototypfilter mit einer Länge kleiner oder gleich M einsetzt und einen realen Datenstrom liefert, **dadurch gekennzeichnet, dass** die gelieferten realen Daten zu Blöcken von nb.M realen Daten zusammengefasst werden, wobei M die Anzahl von Trägern eines der Symbole OFDM/OQAM und nb eine ganze Zahl größer oder gleich 2 ist,

und dass es für einen empfangenen Block von Symbolen OFDM/OQAM mit einer Länge nb.M/2 (400) umfasst:

- Mittel zur Extraktion einer ersten, zweiten und dritten Gesamtheit von modulierten Trägern aus dem Block von Symbolen OFDM/OQAM nach Anwenden von zeitlichen Abstufungen, um eine erste Gesamtheit von M/2 ersten modulierten Trägern, eine zweite Gesamtheit von nb.M/2 modulierten Trägern und eine dritte Gesamtheit von M/2 letzten modulierten Trägern zu erhalten;
- erste Mittel zur Demodulation durch einen ersten Demodulator der ersten Gesamtheit von M/2 ersten modulierten Trägern, die M/2 erste Daten eines realen Datenblocks entsprechend dem empfangenen Block von Symbolen OFDM/OQAM liefern;
- zweite Mittel zur Demodulation durch einen zweiten Demodulator der zweiten Gesamtheit von nb.M/2 modulierten Trägern, die (nb-1).M folgende Daten des realen Datenblocks liefern;
- dritte Mittel zur Demodulation durch einen dritten Demodulator der dritten Gesamtheit von M/2 letzten modulierten Trägern, die M/2 letzte Daten des realen Datenblocks liefern.

12. Computerprogramm, umfassend Befehle für den Einsatz eines Verfahrens nach einem der Ansprüche 1 oder 9, wenn das Programm von einem Prozessor ausgeführt wird.

**Claims**

1. Method for modulating a sequence of real data values, implementing a prototype filter with a length less than or equal to *M* and delivering blocks of OFDM/OQAM symbols, **characterized in that** the said real data values are assembled into blocks (20) of *nb.M* real data values, where *M* is the number of carriers of one of the said blocks of OFDM/OQAM symbols and *nb* an integer greater than or equal to 2,
and **in that** it comprises, for a block of real data, the following steps:

   - first modulation (21) by a first modulator of the first *M/2* data values of the said block of real data, delivering a first set of modulated carriers;
   - second modulation (22) by a second modulator of the next *(nb-1).M* data values of the said block of real data, delivering a second set of *(nb-1).M* modulated carriers;
   - third modulation (23) by a third modulator of the last *M/2* data values of the said block of real data, delivering a third set of modulated carriers;
   - superposition (24) of the said first, second and third sets of modulated carriers, after application of time shifts, in such a manner as to form a block of OFDM/OQAM symbols of length *nb.M/2*, the said first set being superposed in the time domain with the start of the second set and the said third set being superposed in the time domain with the end of the second set.

2. Modulation method according to Claim 1, **characterized in that** it comprises a switching step (25) supplying, for each block of real data:

   - the input of the said first modulator with the first *M/2* data values of the said block of real data;
   - the input of the said second modulator with the next *(nb-1).M* data values of the said block of real data;
   - the input of the said third modulator with the last *M/2* data values of the said block of real data.

3. Modulation method according to Claim 1, **characterized in that** the said first and third modulations implement direct or inverse fast Fourier transforms (FFT or IFFT) supplied with M parallel data values, every other one of which is forced to zero.

4. Modulation method according to Claim 1, **characterized in that** the said method implements a prototype filter with a length less than or equal to *M* performing two different types of filtering, one being applied to the second set of *(nb-1).M* modulated carriers, and the other being applied to the said first set of modulated carriers and to the said third set of modulated carriers delivering a first and a third set each comprising *M/2* filtered modulated carriers.

5. Modulation method according to Claim 3, **characterized in that** the said first and third modulation respectively implement an expansion of the said first *M/2* data values of the said block and of the said last *M/2* data values of the said block of real data, the said expansion consisting in inserting a zero between each of the said first *M/2* data values of the said block of real data and each of the said last *M/2* data values of the said block of real data respectively delivering to the input of the said direct or inverse fast Fourier transforms of the said first and third modulation *M* first expanded data values from the said block of real data and *M* last expanded data values from the said block of real data, every other one of which is forced to zero.

6. Modulation method according to Claim 1, **characterized in that** the said first modulation comprises the following successive sub-steps:

   - expansion of the said first *M/2* data values of the said block of real data, the said expansion consisting in inserting a zero between each of the said first *M/2* data values of the said block of real data, delivering *M* first expanded data values from the said block;
   - series/parallel conversion of the said *M* first expanded data values from the said block of real data, delivering *M* parallel data values at the output of a first series/parallel converter,
   - implementation of a direct or inverse fast Fourier transform (FFT or IFFT) supplied with the said *M* parallel data values at the output of the said first series/parallel converter, every other one of which is forced to zero by the said operation for expansion of the said first *M/2* data values, delivering *M* first modulated carriers,
   - filtering applied to the said *M* first modulated carriers, delivering *M/2* first filtered modulated carriers,
   - parallel/series conversion of the said *M/2* first filtered modulated carriers delivering the said first set of modulated carriers,

**in that** the said second modulation comprises the following successive sub-steps:

- series/parallel conversion of the said next *(nb-1).M* data values of the said block of real data, delivering *(nb-1).M* parallel data values at the output of a second series/parallel converter,
- implementation of *(nb-1)* successive direct or inverse fast Fourier transforms (FFT or IFFT) supplied with the said *(nb-1).M* parallel data values at the output of the said second series/parallel converter, delivering *(nb-1).M* second modulated carriers,
- filtering of length *M* applied to the said *(nb-1).M* second modulated carriers, delivering *(nb-1)* sets of *M* second filtered modulated carriers,
- parallel/series conversion of the said *(nb-1)* sets of *M* second filtered modulated carriers delivering the said second set of *(nb-1).M* modulated carriers,

and **in that** the said third modulation comprises the following successive sub-steps:

- expansion of the said last *M*/2 data values of the said block, the said expansion consisting in inserting a zero between each of the said last *M*/2 data values of the said block of real data, delivering *M* third expanded data values from the said block;
- series/parallel conversion of the said *M* third expanded data for the said block of real data, delivering *M* parallel data values at the output of a third series/parallel converter,
- implementation of a direct or inverse fast Fourier transform (FFT or IFFT) supplied with the said *M* parallel data values at the output of the said third series/parallel converter, every other one of which is forced to zero by the said operation for expansion of the said last *M*/2 data values, delivering *M* third modulated carriers,
- filtering applied to the said M third modulated carriers, delivering *M*/2 third filtered modulated carriers,
- parallel/series conversion of the said *M*/2 third filtered modulated carriers delivering the said third set of modulated carriers.

7. Modulation method according to Claim 1, **characterized in that** the said method furthermore comprises a step for multiplication by a factor equal to √2 of the amplitude of the said first *M*/2 data values of the said block of real data and of the said last *M*/2 data values of the said block of real data.

8. Modulation method according to Claim 3, **characterized in that** the said first and third modulations implement direct or inverse fast Fourier transforms (FFT or IFFT) supplied with *M* parallel data values, whose parallel data values with even indices are forced to zero.

9. Method for demodulating a multicarrier signal of the OFDM/OQAM type comprising blocks of OFDM/OQAM symbols of length *nb.M*/2 obtained by the modulation method according to Claim 1, implementing a prototype filter with a length less than or equal to *M* and delivering a sequence of real data,
**characterized in that** the said real data values delivered are assembled into blocks of *nb.M* real data values, where *M* is the number of carriers of one of the said OFDM/OQAM symbols and *nb* an integer greater than or equal to 2, and **in that** it comprises, for a block of received OFDM/OQAM symbols of length *nb.M*/2 (400), the following steps:

- extraction (40) of first, second and third sets of modulated carriers from the said block of OFDM/OQAM symbols, after application of time shifts, so as to obtain a first set of *M*/2 first modulated carriers, a second set of *nb.M*/2 modulated carriers, and a third set of *M*/2 last modulated carriers;
- first demodulation (41) by a first demodulator of the said first set of *M*/2 first modulated carriers delivering *M*/2 first data values of a block of real data corresponding to the said block of OFDM/OQAM symbols received;
- second demodulation (42) by a second demodulator of the said second set of *nb.M*/2 modulated carriers delivering *(nb-1).M* following data values of the said block of real data;
- third demodulation (43) by a third demodulator of the said third set of *M*/2 last modulated carriers delivering *M*/2 last data values of the said block of real data.

10. Device for modulating a sequence of real data values, implementing a prototype filter with a length less than or equal to *M* and delivering blocks of OFDM/OQAM symbols, **characterized in that** the said real data values are assembled into blocks of *nb.M* real data values, where *M* is the number of carriers of one of the said blocks of OFDM/OQAM symbols and *nb* an integer greater than or equal to 2,
and **in that** it comprises the following means implemented for a block of real data:

- first means for modulation by a first modulator of the first *M*/2 data values of the said block of real data, delivering a first set of modulated carriers;

- second means for modulation by a second modulator of the following *(nb-1).M* data values of the said block of real data, delivering a second set of *(nb-1).M* modulated carriers;

- third means for modulation by a third modulator of the last *M/2* data values of the said block of real data, delivering a third set of modulated carriers;

- means of superposition of the first, second and third sets of modulated carriers, after application of time shifts, in such a manner as to form a block of OFDM/OQAM symbols of length *nb.M/2,* the said first set being superposed in the time domain with the start of the second set and the said third set being superposed in the time domain with the end of the second set.

11. Device for demodulating a multicarrier signal of the OFDM/OQAM type comprising blocks of OFDM/OQAM symbols of length *nb.M/2* obtained by the modulation method according to Claim 1, implementing a prototype filter with a length less than or equal to M and delivering a sequence of real data,

**characterized in that** the said real data delivered are assembled into blocks of *nb.M* real data values, where *M* is the number of carriers of one of the said OFDM/OQAM symbols and *nb* an integer greater than or equal to 2, and **in that** it comprises, for a block of received OFDM/OQAM symbols (400) of length *nb.M/2:*

- means of extraction of first, second and third sets of modulated carriers from the said block of OFDM/OQAM symbols, after application of time shifts, in such a manner as to obtain a first set of *M/2* first modulated carriers, a second set of *nb.M/2* modulated carriers, and a third set of *M/2* last modulated carriers;

- first means for demodulation by a first demodulator of the said first set of *M/2* first modulated carriers delivering *M/2* first data values of a block of real data corresponding to the said received block of OFDM/OQAM symbols;

- second means for demodulation by a second demodulator of the said second set of *nb.M/2* modulated carriers delivering *(nb-1).M* following data values of the said block of real data;

- third means for demodulation by a third demodulator of the said third set of *M/2* last modulated carriers delivering the last *M/2* data values of the said block of real data.

12. Computer programme comprising instructions for the implementation of a method according to either of Claims 1 and 9 when the said programme is executed by a processor.

Fig. 1

Fig. 2

EP 2 803 174 B1

31   32   33

M

Fig. 3A

310      320           330   340

2M

Fig. 3B

Fig. 4

Fig. 5

Fig. 6

72

μP

71 — M        Pg — 73

## Fig. 7

82

μP

81 — M        Pg — 83

## Fig. 8

— 94

— 93

— 92

DSP (dB)

−0.5        0        0.5

Fréquence normalisée

## Fig. 9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 1151590

**Littérature non-brevet citée dans la description**

- **P. SIOHAN ; N. LACAILLE.** Analysis of OFDM/OQAM systems based on the filterbank theory. *Proc. GLOBECOM'99,* Décembre 1999, 2279-2284
- **C. SICLET ; P. SIOHAN.** Design of BFDM/OQAM systems based on biorthogonal modulated filter banks. *Proc. GLOBECOM'00,* Novembre 2000, 701-705
- **M. BELLANGER ; M. RENFORS ; T. IHALAINEN ; C.A.F DA ROCHA.** OFDM and FBMC transmissions techniques : a compatible high performance proposal for broadband power line communications. *IEEE International Symposium on Power Line Communications and Its Applications (ISPLS),* 2010, 154-159
- **Y. DANDACH ; P. SIOHAN.** Packet Transmission for Overlapped Offset QAM. *IEEE International Conference on Wireless Communications and Signal Processing (ICWCSP),* Octobre 2010
- Application de la théorie des bancs de filtres à l'analyse et à la conception de modulations multiporteuses orthogonales et biorthogonales. **C. SICLET.** thèse de Doctorat. Université de Rennes 1, 18 Novembre 2002
- **Y. DANDACH ; P. SIOHAN.** FBMC/OQAM modulators with half complexity. *Proceedings Globecom'11,* 2011
- **P. DUHAMEL ; ET H. HOLLMAN.** Implementation of « split-radix » FFT algorithms for complex, real and real symmetric data. *IEEE International conference on Acoustics, Speech, and Signal Processing ICASSP 85,* Avril 1985, vol. 10, 784-787
- **P. DUHAMEL ; H. HOLLMAN.** Implementation of « split-radis » FFT algorithms for complex, real and real symmetric data. *IEEE International conference on Acoustics, Speech, and Signal Processing ICASSP 85,* Avril 1985, vol. 10, 784-787
- Application de la théorie des bancs de filtres à l'analyse et à la conception de modulations multiporteuses orthogonales et biorthogonales. **C. SICLET.** thèse de Doctor. Université de Rennes 1, 18 Novembre 2002